# EUROPEAN PATENT SPECIFICATION

(11) **EP 0 534 665 B1**
(45) Date of publication and mention of the grant of the patent: **31.03.1999**
(21) Application number: 92308409.9
(22) Date of filing: 16.09.1992
(51) Int. Cl.: G06F 11/00

(54) **Fault containment system and method for multiprocessor with shared memory**
Fehlereinkapselungs-System und Verfahren für Mehrrechner mit geteiltem Speicher
Système et méthode de confinement d'erreur pour multiprocesseur avec mémoire partagée

(30) Priority: 23.09.1991 US 763677
(43) Date of publication of application: 31.03.1993
(73) Proprietor: SUN MICROSYSTEMS, INC., Mountain View, CA 94303 (US)
(72) Inventor: Frank, Steven J., Hopkinton, Massachusetts 01748 (US); Mann, William F., Sudbury, Massachusetts 01776 (US)
(74) Representative: Greenwood, John David

(56) References cited:
- EP-A- 322 117
- EP-A- 404 560
- US-A- 4 503 535

## Description

### Reference to Related Applications

This application is related to the following co-pending and commonly assigned applications:
1) United States Patent Application Serial No. 136,930, filed December 22, 1987, for "MULTIPROCESSOR DIGITAL DATA PROCESSING SYSTEM;"
2) United States Patent Application Serial No. 696,291, filed May 20, 1991 for INTERCONNECTION SYSTEM FOR MULTIPROCESSOR STRUCTURE;
3) United States Patent Application No. 370,325, filed June 22, 1989, for "MULTIPROCESSOR SYSTEM WITH MULTIPLE INSTRUCTION SOURCES";
4) United States Patent Application No. 370,341, filed June 22, 1989, for "IMPROVED MEMORY SYSTEM FOR A MULTIPROCESSOR";
5) United States Patent Application No. 370,287, filed June 22, 1989, for "IMPROVED MULTIPROCESSOR SYSTEM";
6) United States Patent Application No. 499,182, filed March 26, 1990, for "HIGH-SPEED PACKET SWITCHING APPARATUS AND METHOD";
7) United States Patent Application No. 521,798, filed May 10, 1990, for "DYNAMIC PACKET ROUTING NETWORK";
8) United States Patent Application No. 526,396, filed May 18, 1990, for "PACKET ROUTING SWITCH";
9) United States Patent Application No. 531,506, filed May 31, 1990, for "DYNAMIC HIERARCHICAL ASSOCIATIVE MEMORY";
10) United States Patent Application Serial No. 763,368, for DIGITAL DATA PROCESSOR WITH IMPROVED PAGING, filed September 20, 1991;
11) United States Patent Application Serial No. 763,505, for DIGITAL DATA PROCESSOR WITH IMPROVED CHECKPOINTING & FORKING, filed September 20, 1991;
12) United States Patent Application Serial No. 736,132, for IMPROVED DIGITAL DATA PROCESSOR WITH DISTRIBUTED MEMORY SYSTEM, filed September 20, 1991;
13) United States Patent Application Serial No. 736,507, for PARALLEL PROCESSING APPARATUS AND METHOD UTILIZING TILING, filed September 20, 1991;

### Background

This invention relates to digital data storage and accessing and, more particularly, to the detection and containment of faults in distributed memory systems.

Simple computing systems rely on a main memory bank to store data available for processing. When the central processing unit, or CPU, issues a request to read or write a datum, a copy transferred from main memory to a smaller, cache memory associated with the CPU. The datum, if updated by the CPU, is later transferred back from the cache memory to the main memory.

Error detection in simple such systems is limited to checking the parity of the datum during its transfer between the main and cache memories. In the event of a parity error, the computer system can alert the operator, then halt operation, preventing further processing of potentially flawed data.

More complex systems incorporate error checking and correction (ECC) codes within each data word. These codes effectively represent the parity of respective overlapping subsets of bits within a data word. Through these codes, the systems can not only detect data errors, but can also correct certain ones of them, e.g., errors involving a single erroneous bit.

In systems employing ECC codes, simple errors are typically corrected and logged as the requested datum is routed to its destination. Complex transmission errors may require regeneration of the faulty datum. Where a stored datum itself is faulty, the system may mark that datum to prevent further access.

Error detection becomes more complicated in computer systems which employ distributed memory, i.e., a plurality of distinct memory elements storing data from one or more processors. An example of such a system is disclosed by EP-A-0 322 117 which discloses a digital data processing apparatus according to the preamble of claim 1, hareafter referred to as the Frank et al system.

Within the Frank at al system, there a digital data processing system is said to comprise a plurality of processing cells arranged in a hierarchy of rings. The processing cells include central processing units coupled with memory elements. Groups of cells are interconnected along unidirectional bus rings to form units referred to as segments. Communications between cells of different domain(0) segments are carried out on higher level information transfer domains. These higher level domains are themselves made up of one or more segments, each comprising a plurality of routing elements coupled via a unidirectional bus ring.

A system of the type described by Frank at al does not require a main memory element, i.e., a memory element coupled to and shared by the system's many processors. Rather, data maintained by the system is distributed, both on exclusive and shared bases, among the memory elements associated with those processors. Modifications to datum stored exclusively in any one processing cell do not have to be communicated along the bus structure to other storage areas. Accordingly, only that data which the processors dynamically share, e.g., sharing required by the executing program themselves, must be transmitted along the bus structure.

Those skilled in the art will appreciate the difficulties inherent to fault detection and containment in a distributed, shared memory system of the type described by Frank at al. When, for example, a first CPU accesses a faulty datum, that CPU must detect the fault, process it and, ultimately, try to correct it. Before it is corrected, however, a second CPU may access the faulty datum and use it to generate other data which, too, are likely to be erroneous. In this manner, the initial fault can propagate throughout the system before it is detected and properly handled.

In view of the foregoing, an object of this invention is to provide improved an mechanism for fault detection and containment within a distributed memory system.

Another object is to provide means for limiting the propagation of erroneous data within such systems.

A still further object is provide a ready mechanism for identifying the source of error.

The present invention is characterized by the features of the characterizing portion of apparatus claim 1. A method corresponding thereto is defined in independent claim 26. Further enhancements are claimed in the subclaims.

### Summary of the Invention

The above objects are attained by the invention, which provides in one aspect an improved multiprocessor system of the type having a plurality of processors coupled via a network to a memory element. The memory responds to at least a selected datum request generated by a processor for accessing that datum and, absent fault, transmitting it in a response packet to at least to the requesting processor. A fault containment element responds to at least certain faults during access or transmission of the datum for including within the response packet a fault signal that, in some circumstances, may prevent the requestor from accessing the datum.

At least one processor, other than the requestor, can store status information for one or more data. Such a processor normally responds to at least selected response packets carried on the network for updating the status with respect to data contained packets passing on the network. In the case of packets that include the fault signal, however, the fault containment element prevents that other processing cell from updating the corresponding status information.

Each processor of the above-described multiprocessor system may be associated with a respective memory element, such that each processor and its associated memory is referred to as a processing cell. A subcache within a processing cell temporarily stores data being currently accessed by the processor. The associated memory element includes a cache memory and controller coupled to that cache and to the subcache.

In the absence of fault, the controller accesses in the cache at least selected data requested by the associated central processing unit, transferring that data to the subcache. A subcache disable element is responsive to at least selected faults in operation of the cache or subcache for preventing the transfer of data therebetween.

According to still another aspect of the invention, each of at least selected data are associated with descriptors by which those data are referenced. The memory elements include functionality for modifying the descriptor associated with a particular datum in the event of selected fault in that datum.

The fault-detection element of a multiprocessor apparatus as described above can include a marking element for incorporating into the response packet a signal representing a specific fault condition, if any, detected in connection with responding the access request.

For example, in response to a selected fault condition isolated to a datum not previously detected as faulty, the marking element can include a "marked fault" signal in the response packet. Whereas, it can include an "unmarked fault" signal in response to a selected fault condition associated with a requested datum, but not specifically isolated to that datum.

In instances where a request is made for a datum which had previously been detected as faulty, the marking element can include in the response packet a "descriptor fault" signal. This is a significant feature in that it can facilitate identification of a particular source of an error and prevent that error from propagating to other processing cells.

Thus, for example, if multiple processors request access to a faulty datum, only the earliest one of those requestors will be signalled with the "marked fault" signal. The rest will be signalled with the "descriptor fault" signal. By tracking that information, the system software can more readily locate the probable cause of the error.

Per the aforementioned aspect, the fault detection element can determine whether a requested datum had previously been detected as faulty by reference to a fault flag associated with that datum. That fault flag can be set, for example, in connection with generation of the marked fault signal discussed above.

According to another aspect of the invention, the network element can include a bus for carrying packets and a plurality of control elements coupled between respective ones of the memories and the bus for selectively transferring packets therebetween. The marking element can respond to a fault in connection with the transfer of packets by the control elements for including in the response packet a "local fault" signal.

In still another aspect of the invention, the bus can include a plurality of segments, with routing elements coupled between respective pairs of the segments for selectively transferring packets therebetween. The marking element can respond to a fault in connection with the transfer of a packet by one of those routing elements for including in the packet a remote fault signal.

Each datum stored by the memory elements of a multiprocessor system constructed in accord with the invention can be associated with an address by which that datum is referenced. The addresses associated with the data stored in the plurality of memory elements comprise a single virtual address space. The processors of that system generate the access requests specifying the address associated with each requested datum, and the memory elements respond to the specified addresses for accessing the requested datum.

These and other aspects of the invention are evident in the drawings which are attached and in the detailed description which follows.

### Brief Description of the Drawings

A fuller understanding of the invention may be attained by reference to the drawings, in which:
Figure 1 depicts the structure of a multiprocessing system for use in a preferred practice of the invention;
Figures 2A - 2B depict a preferred memory configuration and data management operation for the multiprocessor of Figure 1;
Figure 3 depicts a preferred configuration for an exemplary level:0 segment of the multiprocessing system of Figure 1;
Figure 4 depicts a preferred structure for processing cells of the multiprocessing system of Figure 1;
Figure 5 depicts a preferred structure of a cache directory of the multiprocessing system of Figure 1;
Figure 6 overviews the fault categories detected by a multiprocessor system according to the invention, and the actions taken as a result of those faults;
Figure 7 more completely details the faults handled by such a multiprocessor system and the actions it takes in response thereto; and
Figure 8 specifies SubCacheDisable actions taken by the processing cells of the illustrated multiprocessing system.

### Detailed Description of the Illustrated Embodiment

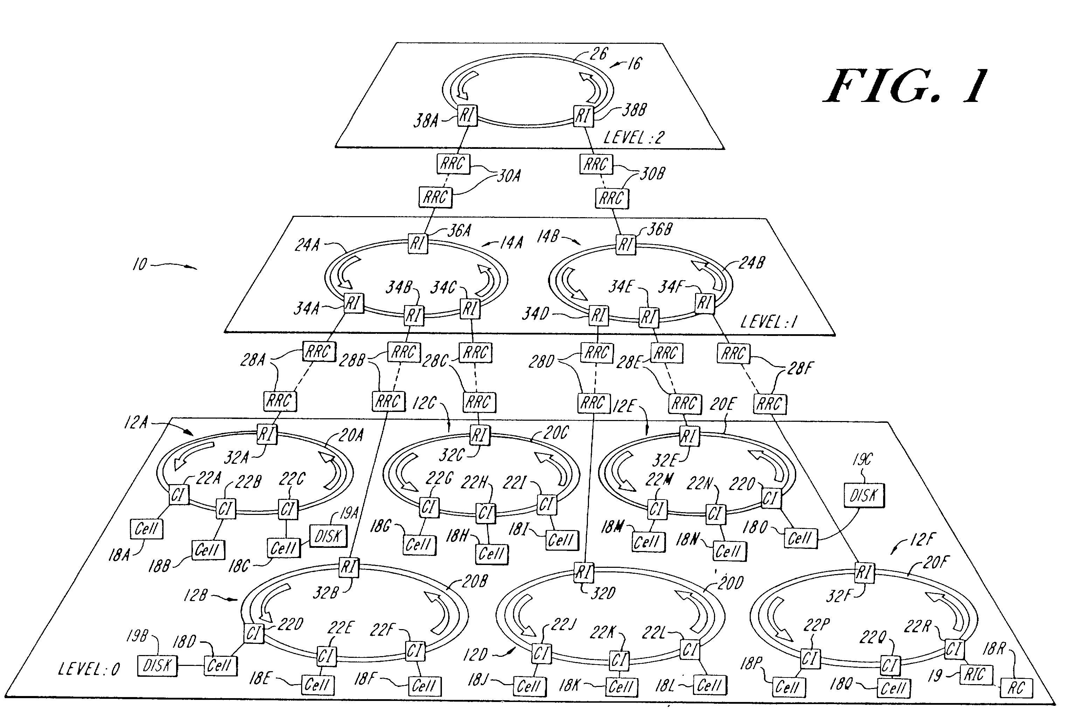

Figure 1 depicts a preferred multiprocessing system used to practice the invention. The illustrated system 10 includes three information transfer levels: level:0, level:1, and level:2. Each information transfer level includes one or more level segments, characterized by a bus element and a plurality of interface elements.
Particularly, level:0 of the illustrated system 10 includes six segments, designated 12A, 12B, 12C, 12D, 12E and 12F, respectively. Similarly, level:1 includes segments 14A and 14B, while level:2 includes segment 16.

Each segment of level:0, i.e., segments 12A, 12B, ... 12F, comprise a plurality of processing cells. For example, segment 12A includes cells 18A, 18B and 18C; segment 12B includes cells 18D, 18E and 18F; and so forth. Each of those cells include a central processing unit and a memory element, interconnected along an intracellular processor bus (not shown). In accord with the preferred practice of the invention, the memory element contained in each cells stores all control and data signals used by its associated central processing unit.

Certain cells of the processing system 10 are connected to secondary storage devices. In the illustrated system, for example, cell 18C is coupled with disk drive 19A, cell 18D is coupled with disk drive 19B, and cell 180 is coupled with disk drive 19C. The disk drives 19A - 19C are of conventional design and can be selected from any of several commercially available devices. It will be appreciated that secondary storage devices other than disk drives, e.g., tape drives, can also be used to store information.

As further illustrated, each level:0 segment may be characterized as having a bus element providing a communication pathway for transferring information packets between the cells of the segment. Thus, illustrated segment 12A is characterized by bus 20A, segment 12B by 20B, segment 12C by 20C, et cetera. As described in greater detail below, digital information packets are passed between the cells 18A, 18B and 18C of exemplary segment 12A by way of the memory elements associated with each of those cells. Specific interfaces between those memory elements and the bus 20A are provided by cell interface units 22A, 22B and 22C, as shown. Similar direct communication pathways are established in segments 12B, 12C and 12D between their respective cells 18D, 18E ... 18R by cell interface units 22D, 22E, ... 22R, as illustrated.

As shown in the illustration and noted above, the remaining information transfer levels, i.e., level:1 and level:2, each include one or more corresponding level segments. The number of segments in each successive segment being less than the number of segments in the prior one. Thus, level:1's two segments 14A and 14B number fewer than level:0's six 12A, 12B ... 12F, while level:2, having only segment 16, includes the fewest of all. Each of the segments in level:1 and level:2, the "higher" levels, include a bus element for transferring packets within the respective segments. In the illustration, level:1 segments 14A and 14B include bus elements 24A and 24B, respectively, while level:2 segment 16 includes bus element 26.

The routing cells themselves provide a mechanism for transferring information between associated segments of successive levels. Routing cells 28A, 28B and 28C, for example, provide a means for transferring information to and from level:1 segment 14A and each of level:0 segments 12A, 12B and 12C, respectively. Similarly, routing cells 28D, 28E and 28F provide a means for transferring information to and from level:1 segment 14B and each of level:0 segments 12D, 12E and 12F, respectively. Further, routing cells 30A and 30B provide an information transfer pathway between level:2 segment 16 and level:1 segments 14A and 14B, as shown.

The routing cells interface their respective segments via interconnections at the bus elements. Thus, routing cell 28A interfaces bus elements 20A and 24A at ring interconnects 32A and 34A, respectively, while element 28B interfaces bus elements 20B and 24B at ring interconnects 32B and 34B, respectively, and so forth. Similarly, routing cells 30A and 30B interface their respective buses, i.e., 24A, 24B and 26, at ring interconnects 36A, 36B, 38A and 38B, as shown.

### Data Movement & Coherency

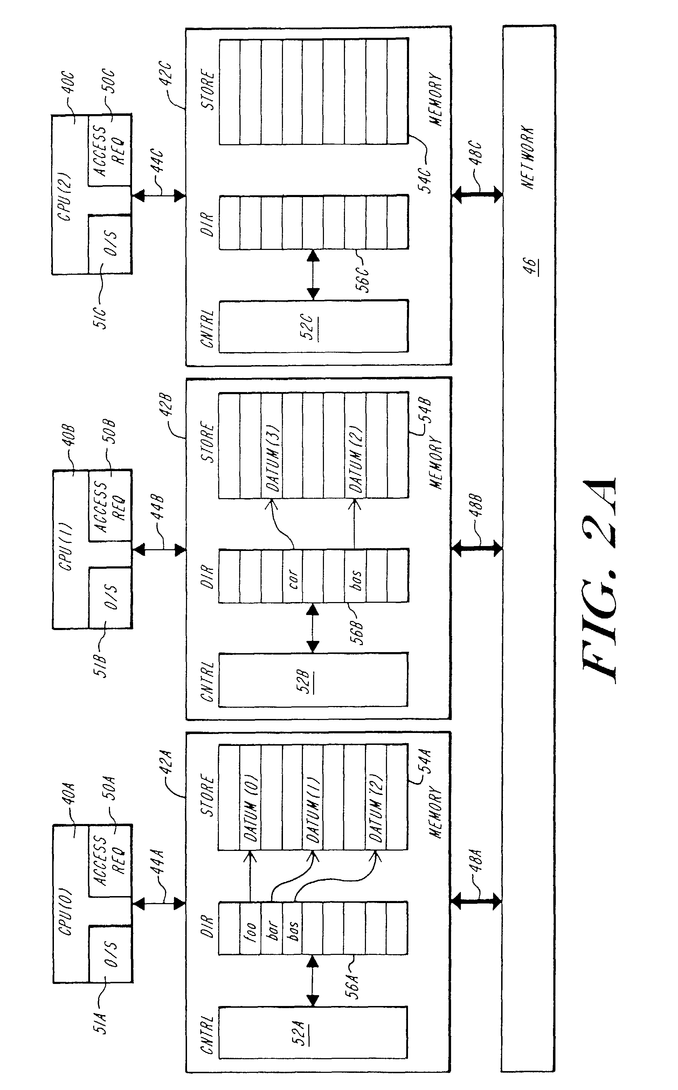

Figure 2A illustrates a mechanism for data movement within the processing system of Figure 1 for insuring data coherence. In the drawing, plural central processing units 40(A), 40(B) and 40(C) are coupled, respectively, to associated memory elements 42(A), 42(B) and 42(C). Communications between the processing and memory units of each pair are carried along buses 44A, 44B and 44C, as shown. Network 46, representing the aforementioned level segments and routing cells, transfers information packets (passed to the network 46 over buses 48(A), 48(B) and 48(C) between the illustrated processing cells 42A - 42C.

In the illustrated embodiment, the central processing units 40A, 40B and 40C each include an access request element, labelled 50A, 50B and 50C, respectively. These access request elements generate requests for access to data stored in the memory elements 42A, 42B and 42C. Among access requests signals generated by elements 50A, 50B and 50C is the ownership-request, representing a request for exclusive, modification access to a datum stored in the memory elements. In a preferred embodiment, access request elements 50A, 50B and 50C comprise a subset of an instruction set implemented on CPU's 40A, 40B and 40C. This instruction subset is described below.

The central processing units 40A, 40B, 40C operate under control of an operating system 51, portions 51A, 51B and 51C of which are resident on respective ones of the central processing units. The operating system 51 provides an interface between applications programs executing on the central processing units and the system 10 facilities, and includes a virtual memory management system for managing data accesses and allocations.

A preferred operating system for controlling central processing units 40A, 40B and 40C is a UNIX-like operating system and, more preferably, OSF/1 1.0, modified in accord with the teachings herein.

The memory elements 40A, 40B and 40C include cache control units 52A, 52B and 52C, respectively. Each of these cache control units interfaces a data storage area 54A, 54B and 54C via a corresponding directory element 56A, 56B and 56C, as shown. Stores 54A, 54B and 54C are utilized by the illustrated system to provide physical storage space for data and instruction signals needed by their respective central processing units. Thus, store 54A maintains data and control information used by CPU 40A, while stores 54B and 54C maintain information used by central processing units 40B and 40C, respectively. The data maintained in each of the stores are identified by unique descriptors corresponding to system addresses. Those descriptors are stored in address storage locations of the corresponding directory. While the descriptors are considered unique, multiple copies of some descriptors may exist among the memory elements 42A, 42B and 42C where those copies themselves identify copies of the same data element.

Access requests generated by the central processing units 40A, 40B and 40C include, along with other control information, a descriptor or SVA ("system virtual address") request portion matching that of the requested datum. The cache control units 52A, 52B and 52C respond to access requests generated their respective central processing units 40A, 40B and 40C by determining whether the requested datum is stored in the corresponding storage element 54A, 54B and 54C. If so, that item of information is transferred for use by the requesting processor. If not, the cache control unit 52A, 52B, 52C transmits a packet including the request to the network 46 along lines 48A, 48B and 48C.

As that packet travels within the networks and, particulary, along the ring:0 segments, cache control units within the processing cells check their own directories, passing the requested data, if found, in a response packet. Likewise the local routing element checks its directory. If that directory shows that the requested data is present in local ring in the proper access state, the routing cell permits the request packet to continue along the local ring bus. If not, the routing cell extracts the packet and passes to the associated level:1 segment.

The unresolved request packet travels along the level:1 segment in a similar fashion, i.e., it is compared with the directories of the associated level:1 routing cells. If one of those directories lists the requested data in the proper access state in a descendant level:0 segment, the request is passed to that segment. Otherwise, the request packet may pass to a higher level, if any, in the hierarchy or be returned to the requester unresolved.

Packets containing requested data are routed back to requesting cells by differing mechanisms. A first mechanism relies on the address, or ID, of the requesting cell. Here, each requesting cell includes within its request packet an ID uniquely identifying that cell. Once that packet reaches the responding cell, that cell copies the requestor-ID, along with the datum and corresponding descriptor, into the response packet. As the response packet travels along the segments rings, the routing cells examine the requestor-ID to determine whether the requesting cell is in a descendant or parent segment and route the packet accordingly.

A second mechanism is used in conjunction with response packets that include data requested by processing cells but not specifically generated in response to those requests. By way of example, the mechanism applies in instances where two or more requesting cells generate requests for read-only copies to a specific datum held in a remote cell.

Presuming, in accord with one preferred practice of the invention, that the network prevents at least some, but not all, of those requests from reaching a processing cell having a copy of that datum, the responding cell generates response packets bearing only the requestor-ID of a request packet that reached it.

Data coherency is maintained by cooperative action of the processing cells in response to data requests and transfers. More particularly, concurrent with generation of an ownership-access request packet by a first processing cell, the associated memory allocates in its store physical space to hold the requested data. Likewise, concurrent with the transfer of a requested datum from the processing cell in which it was previously stored, the associated memory deallocates physical storage space which had been previously allocated for storage of the requested datum.

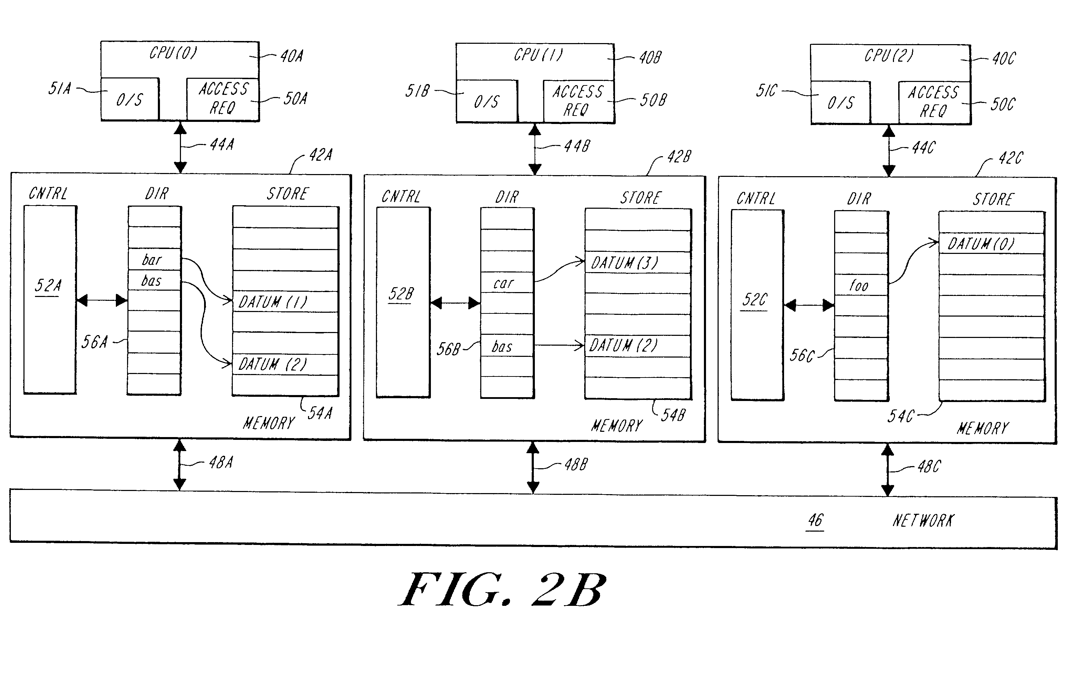

These cooperative actions are illustrated in Figures 2A and 2B. In the first of those drawings, DATUM(0), DATUM(1) and DATUM(2), representing data subpages, are retained in the store of the memory element 42A partnered with CPU 40A. Descriptors "foo," "bar" and "bas" which correspond, respectively, to those data stored in directory 56A. Each such descriptor includes a pointer indicating the location of its associated information signal in the store 42A.

The memory element 42B partnered to CPU 40B stores DATUM(2) and DATUM(3), which also represents a data subpage. Corresponding to each of those data elements are descriptors "car" and "bas," retained in directory 56B. DATUM(2), and its descriptor "bas," are copied from store 42A and, therefore, retain the same labels.

The system illustrated in Figure 2A does not store any data in the memory element 54C partnered to CPU 40C.

Figure 2B illustrates how a datum moves in conjunction with an ownership for it by processing cell which does not already have access to that datum. In particular, the illustration depicts the movement of DATUM(0) following issuance of an unresolved request for ownership for it by the processing cell made up of CPU 40C and memory 42C. At the outset, concurrent with the request, the cache control unit 52C allocates physical storage space in the store 54C of memory element 42C.

A response packet generated by memory 42A transfers the requested data, DATUM(0), from store 54A, where it had previously been stored, to the requestor's store 54C. Concurrently the cache control unit 52A deallocates that space in store 54A which had previously held the requested datum. At the same time, the cache control unit 52A effects invalidation of the descriptor "foo" in directory 56A (where it had previously been used to identify DATUM(0) in store 54A), while cache control unit 52C reallocates that same descriptor in directory 56C, where it will subsequently be used to identify the signal in store 54C.

In addition to descriptors, the memory elements 42A - 42C assign access state information to the data and control signals in their respective stores. These access states, which include the invalid, read-only, ownership and atomic states, govern the manner in which data may be accessed by specific processors. A datum which is stored in a memory element whose associated CPU maintains modification access over that datum is assigned an ownership state. While, a datum which is stored in a memory element whose associated CPU does not maintain priority access over that datum is assigned a read-only state. Further, a purported datum which associated with "bad" data is assigned the invalid state.

A further appreciation of preferred structures (e.g., cache control units and ring routing cells) for data movement and memory coherence in a digital data processing system constructed in accord with the invention may be had by reference to the above-cited related applications, e.g., U.S.S.N. 136,930, filed December 22, 1987, (Attorney Docket No. KSP-001) and U.S.S.N. 370,287, filed June 22, 1989, (Attorney Docket No. KSP-007CP), U.S.S.N. 521,798, filed May 10, 1990, (Attorney Docket No. KSP-011), U.S.S.N. 531,506, filed May 31, 1990, (Attorney Docket No. KSP-016).

### Segment Bus

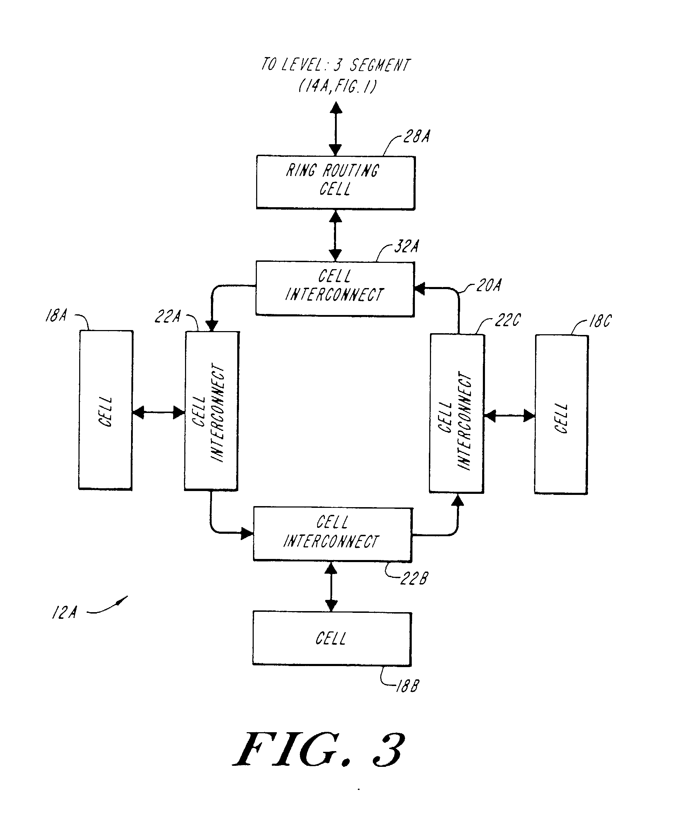

Figure 3 depicts a preferred configuration for exemplary level:0 segment 12A of Figure 1. The segment 12A includes processing cells 18A, 18B and 18C interconnected by cell interconnects 22A, 22B and 22c along bus segment 20A. Routing unit 28A provides an interconnection between the level:0 segment 12A and if parent, level:1 segment 14a of Figure 1. This routing unit 28A is coupled along bus 20A by way of cell interconnect 32A, as shown. The structure of illustrated bus segment 20A, as well as its interrelationship with cell interconnects 22A, 22B, 22C and 32A, may be fully appreciated by reference to the above-cited related applications, e.g., United States Patent Application No. 696,291 (Attorney Docket No. KSD-002C2).

### Processing Cell

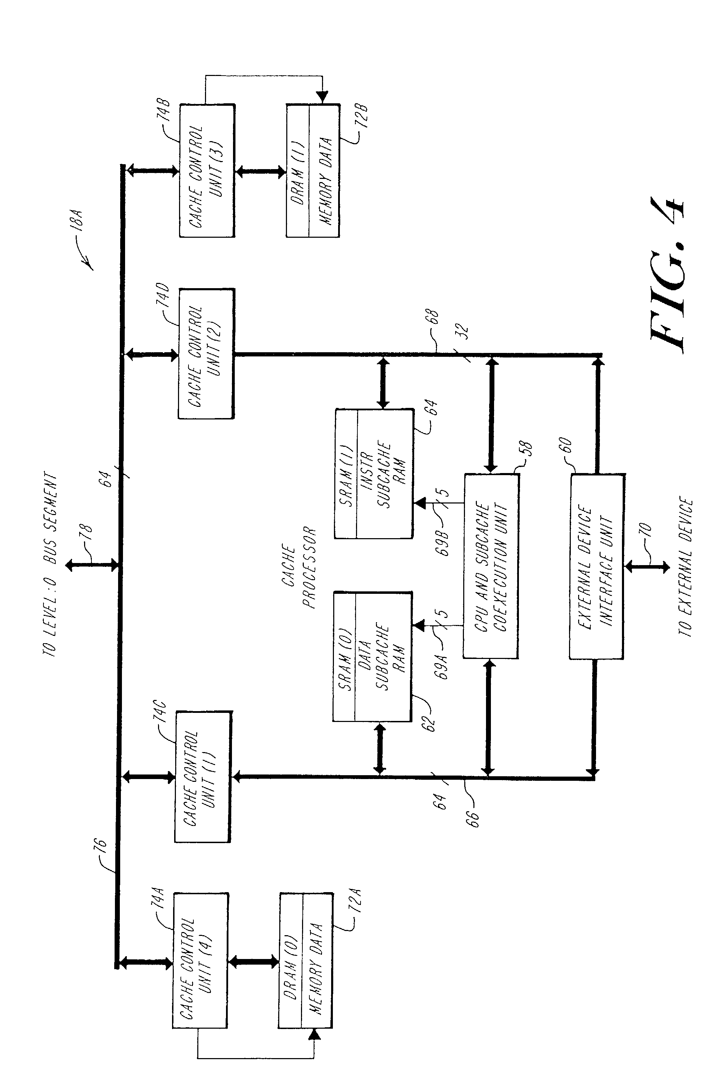

Figure 4 depicts a preferred structure for an exemplary processing cell 18A of the illustrated embodiment. The illustrated processing cell 18A includes a central processing unit 58 coupled with external device interface 60, data subcache 62 and instruction subcache 64 over processor bus 66 and instruction bus 68, respectively.

Interface 60 provides communications with an external device, e.g., disk drive 19A, over external device bus 70, in a manner conventional to the art.

A more complete understanding of the circuitry illustrated in this drawing may be attained by reference to the above-cited related patent applications, e.g., Serial Nos. 136,930, filed December 22, 1987 (Attorney Docket No. KSP-001), 370,325, filed June 22, 1989 (Attorney Docket No. KSP-006), and 499,182, filed March 26, 1990 (Attorney Docket No. KSP-014).

### The Memory System

As discussed above, a multiprocessing system 10 constructed in accord with a preferred embodiment of the invention permits access to individual data elements allocated to processing cells 18A, 18B, . . . 18R by reference to a unique descriptor, based on a system virtual address (SVA), associated with each datum. In the illustrated system 10, implementation of this capability is provided by the combined actions of the processing cell memory units in connection with their transfer of request and response packets over the network 46. In the discussion which follows, this is collectively referred to as the "memory system."

The illustrated system's processors, e.g., processors 40A, 40B, 40C, communicate with the memory system via two primary logical interfaces. The first is the data access interface, which is implemented by the load and store instructions. In data access mode, the processor presents the memory system with an SVA and access mode information, and the memory system attempts to satisfy that access by finding the subpage containing the data and returning it.

The second logical interface mode is control access, which is implemented by memory system control instructions. In control access, the processor instructs the memory system to perform some side effect or return some information other than the actual data from a page. In addition to the primary interfaces, the operating system 51 (e.g., the operating system) uses control locations in SPA space for configuration, maintenance, fault recovery, and diagnosis.

The memory system implements a hierarchy of storage. In the illustrated, preferred embodiment, each processing cell contains a central processing unit (or CEU) which has a subcache that stores 0.5 MBytes of data. Those processing cells also include caches, which store 32 MBytes of data. Moreover, a preferred level:0 having, for example, 15 processing cells stores a total of 480 MBytes. While, a preferred level:1 having, for example, 32 level:0's has a total of 15360 MBytes.

The memory system stores data in units of pages and subpages. For example, in the illustrated embodiment, each individual cache describes 32 Mbytes of SVA space, subdivided into 2048 pages. Pages contain 2¹⁴ (16384) bytes, divided into 128 subpages of 2⁷ (128) bytes. The memory system allocates storage in the caches on a page basis, and each page of SVA space is either entirely represented in the system or not represented at all. The memory system shares data between caches in units of subpages.

When a page of SVA space is resident in the system, the following are true:
(1) One or more caches allocates a page of storage to the page, each subpage of the page is stored on one or more of the caches with space allocated, but
(2) Each cache with space allocated for a page may or may not contain a copy of all (or any) of the page's subpages.

A further appreciation of a preferred memory system for use in a digital data processing system constructed in accord with the invention may be had by reference to the above-cited related applications, e.g., U.S.S.N. 136,930, filed December 22, 1987, (Attorney Docket No. KSP-001) and U.S.S.N. 370,287, filed June 22, 1989, (Attorney Docket No. KSP-007CP), U.S.S.N. 521,798, filed May 10, 1990, (Attorney Docket No. KSP-011), U.S.S.N. 531,506, filed May 31, 1990, (Attorney Docket No. KSP-016).

### Subpage States

The subpage states are defined in terms of three classes of subpage states: invalid, read-only, and owner. These three classes are ordered in strength according to the access that they permit. Invalid states permit no access. Read-only state permits load and instruction-fetch access. There are several owner states: all permit load access and permit the cache to respond to a data request from the network 46; some permit store access. Only one cache may hold a particular subpage in an owner state at any given time. The cache that holds a subpage in an owner state is called the owner of the subpage. Ownership of each subpage moves from cache to cache as processors request ownership via store instructions, special load instructions, and atomic state instructions (e.g., gsp or rsp) that request ownership.

A further appreciation of preferred subpage states used in a digital data processing system constructed in accord with the invention may be had by reference to the above-cited related applications, e.g., U.S.S.N. 136,930, filed December 22, 1987, (Attorney Docket No. KSP-001), U.S.S.N. 370,287, filed June 22, 1989, (Attorney Docket No. KSP-007CP), U.S.S.N. 521,798, filed May 10, 1990, (Attorney Docket No. KSP-011), and U.S.S.N. 531,506, filed May 31, 1990, (Attorney Docket No. KSP-016).

### Cache Directories

The associations between cache pages and SVA pages are recorded by each cache in its cache directory. Each cache directory is made up of descriptors. There is one descriptor for each page of memory in a cache. At a particular time, each descriptor is said to be valid or invalid. If a descriptor is valid, then the corresponding cache memory page is associated with a page of SVA space, and the descriptor records the associated SVA page address and state information. If a descriptor is invalid, then the corresponding cache memory page is logically not in use. There is no explicit validity flag associated with a descriptor; a descriptor may be considered invalid if the anchor and held fields are both clear, and there are no valid subpages present for the SVA page.

Each cache directory acts as a content-addressable memory. This permits a cache to locate a descriptor for a particular page of SVA space without an iterative search through all of its descriptors. Each cache directory is implemented as a 16-way set-associative memory with 128 sets. All of the pages of SVA space are divided into 128 equivalence classes, each associated with a cache directory set. A descriptor for a page can only be stored in the set of a cache directory that corresponds to the page's equivalence class. The equivalence class is selected by SVA[20:14]. At any given time, a cache can describe no more than 16 pages with the same value for SVA[20:14], since there are 16 elements in each set.

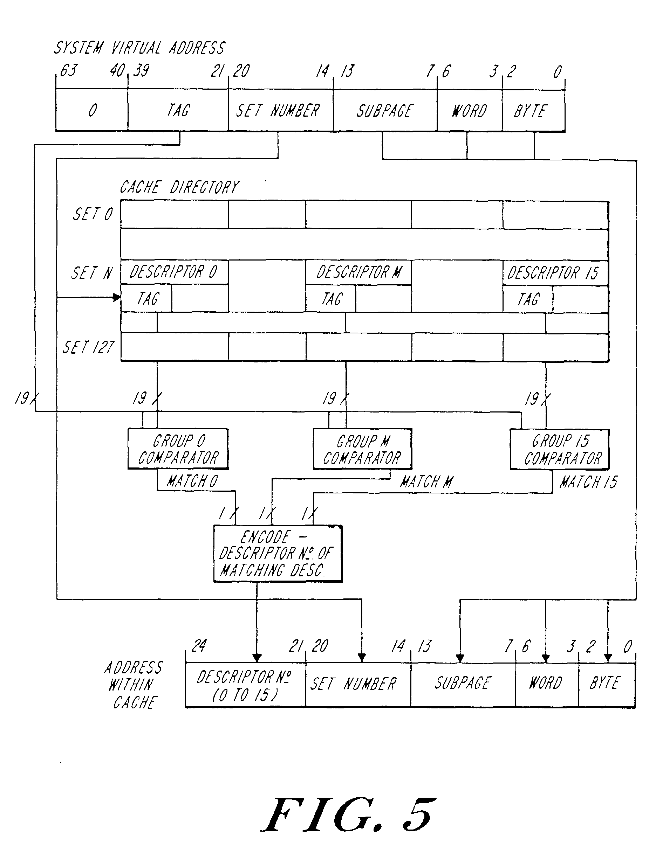

A preferred organization of a cache directory is shown in Figure 5. When a reference to an SVA is made, the cache must determine whether or not it has the required information. This is accomplished by selecting a set within the cache, and then examining all the descriptors of that set. SVA[20:14] selects a set. In the general architecture, each of the descriptors in the selected set is simultaneously compared against SVA[63:21]. In a preferred embodiment having a 240 Mbyte SVA space, this implies a comparison with SVA[39:21]. If one of the elements of the set is a descriptor for the desired page, the corresponding comparator will indicate a match. The index in the set of the matching descriptor, concatenated with the set number, identifies a page in the cache.

If more than one descriptor matches, the cache signals a multiple descriptor_match exception. If no descriptor matches, the cache allocates a descriptor and requests data from the network. It is possible that either the allocation or data request will fail, and the cache will indicate an error to the CEU.

The use of SVA[20:14] to select a set is effectively a hash function over SVA addresses. The operating system 51 must assign SVA addresses so that this hash function gives good performance in common cases. There are two important distribution cases: referencing many pages of a single segment and referencing the first page of many segments. This set selector produces good cache behavior for contiguous groups of pages, since 128 contiguous pages will reside in 128 distinct sets. However, this selector will produce poor hashing behavior for many pages with the same value in SVA[20:14]. The operating system 51 can avoid the latter situation by varying the logical origin of data within segments. For example, each per-process user stack can be started at a different segment offset.

### Contents of a Descriptor

When a cell responds to a request for a subpage, it supplies the subpage data and the values of certain descriptor fields in the local cache. When the response returns to the requestor it either copies those fields to descriptor fields (if it has no other valid subpages) or logically OR's those fields into descriptor fields. Some descriptor fields are never supplied by the responder nor updated by the requestor.

The descriptor fields include, inter alia, the following:
descriptor.tag (19 bits)
   Bits [39:21] of an SVA. This field identifies the particular page of SVA space specified by the corresponding descriptor. For a given set in a given cell, this field must be unique among all 16 descriptors. Operating system 51 'sets' this field when it creates an SVA page. (It is also set by operating system 51 during cache initialization.)
descriptor.summary 1 (4 summary1s, 3 bits)
   Each page contains four summary1 fields. Each summary1 summarizes 4 summary2 fields called the summary2 set. SVA[13:12] selects one fo four summary1 fields and corresponding summar2 set. Each summary2 set contains four summar2 fields. Some summar1 values override the value of summar2 fields. Summary1 is updated during each subpage reference for use by the Cache during descriptor replacement. Initialized to invalid by local cache descriptor allocation.
descriptor.summary2 (16 summary2s, 3 bits)
   Each summary2 summarizes 8 subpage state fields called the subpage set. SVA[13:10] selects one of sixteen summar2s within a page and SVA[11:10] selects one of four summary2 fields within the selected summary2 set. Some summar2 values override the vlude of subpage state fields. Summary2 is updated during each subpage reference for use by the Cache during descriptor replacement.
descriptor.subpage_state (128 subpages, 4 bits)
   The subpage state consists of a three-bit state field and a single bit subcached status field. It is set by the cache to record the state of each subpage and to indicate whether or not any portion of the subpage is present in the CEU subcache. The subpage_state within a page is indexed by SVA[13:7]. Since the summar1 and summary2 fields can override the corresponding subpage_state field, the summar1, summary2 and supage_state fields must be read to determine the actual subpage state.
descriptor.fault (1 bit)
   A cache sets this bit flag when any hardware fault is detected in any data structure, cache operation or Ring Operation corresponding to the page or subpages described by this descriptor. Data structures include all descriptor fields and corresponding subpage data. Faults detected during cache or ring operations include local or remote rules and parity errors. The cache signals a descriptor_fault on any processor or ring reference to the subpages corresponding to this descriptor. It is cleared by the local cache descriptor allocation.

A further appreciation of preferred structures for the cache directory and descriptors, as well as of memory system control instructions, in a digital data processing system constructed in accord with the invention may be had by reference to the above-cited related applications, e.g., U.S.S.N. 136,930, filed December 22, 1987, (Attorney Docket No. KSP-001), U.S.S.N. 370,287, filed June 22, 1989, (Attorney Docket No. KSP-007CP), U.S.S.N. 521,798, filed May 10, 1990, (Attorney Docket No. KSP-011), and U.S.S.N. 531,506, filed May 31, 1990, (Attorney Docket No. KSP-016).

### Fault Detection - Overview

The illustrated system 10 supports detection of most single faults. All faults, including those which are transparently corrected by hardware are reported to system software. The system uses ECC circuitry to protect all DRAM. In this regard, the processing cell cache and RRC directories (e.g., cell cache 56A, Figure 2) are partially implemented using DRAMs. Single bit errors are, thus, corrected.

The system 10 relies on software assisted memory scrubbing to minimize the probability of multiple bit errors. If the single bit error rate for a field replaceable unit (FRU) exceeds a threshold, the FRU is scheduled to be replaced.

The system 10 uses parity checking to detect errors and to protect other RAM structures. This includes all visible and transparent locations. Likewise, the system uses parity checking to protect all data transfers over interconnects and buses. The interconnection between RRC:0s and RRC:1s, the InterRingLink is protected by a checksum. For a more complete understanding of this interconnection see the aforementioned related applications, for example, in copending, commonly assigned application U.S.S.N. 521,798, filed May 10, 1990, as Attorney Docket No. KSP-011)

The processing cells (e.g., 18K) and RRC's (e.g., 28D) detect memory system protocol ownership and logical inconsistencies. These include, for example, inconsistencies in memory system state such as dual subpage ownership or inappropriate commands are detected. Memory system faults are confined by a flag within each descriptor which records that the descriptor of the data which it describes might have been damaged.

Hardware faults are detected and reported by all caches and RRCs which participate in the corresponding request and/or response. Faults are reported differently depending on whether they are newly detected, or were previously detected. Missing response, on the other hand, are detected by request timeouts used by,requesting processing cells.

The disk subsystem, e.g., 19B, can provides redundancy to handle disk drive and most device controller failures. This is accomplished by a parity and checksumming technique which tolerates a single failure across each array of 5 disk drawers. In addition, an error correcting code allows small burst errors to be corrected by device controller. If correctable errors for a disk exceed a threshold, the disk should be replaced.

System software faults are, to a degree, detected by individual watchdog timers on each cell.

### Fault Containment - Overview

The system 10 detects, reports and records all hardware faults in the local directory (e.g., 56A) of all caches (e.g, 42A) and RCCs (e.g., 28F) which participate in the corresponding request and/or response. All faults are categorized as newly detected faults and previously detected faults, in the manner described below.

When a processing cell (e.g., 18A) detects a memory system fault, e.g., a descriptor or data fault, it sets a fault flag within the descriptor to indicate that it or the data it describes might have been damaged. Such a fault is contained by preventing subsequent SVA access (and any movement of the data within the system) to the damaged pages by signalling that a fault has been previously detected.

### Software Analysis and Reconfiguration

In operation, the sequence of steps executed by the system 10 from the time of error detection to FRU replacement is as follows:
1. The system hardware (e.g., cell 18A) detects a processor or memory system fault and contains it to within a single cell and single page.
2. System software then analyzes the reported error and determines which page(s) or subpage(s) within the effected cell(s) are damaged. The remaining pages are then removed from the faulty cell(s). The faulty cell(s) are then deconfigured and the Ring:0s, RRCs and Ring:ls are approximately reconfigured.
3. At this point, system software can determine which processes or file(s) are dependent on the damaged data. If the applications are not fault tolerant, the process(s) can be killed with error status, and file(s) marked as damaged. Damaged files return error status file system calls and page faults are returned for loads or stores. If a process or application with damaged data is designed as fault tolerant (for example using checkpoint/restart capability), its threads can be restarted from the last checkpoint. See, aforementioned related application U.S.S.N. 07/763,505, filed September 20, 1991 (non issued as US-A- 5,313,647)
4. Replacement of failed, deconfigured modules can in most cases occur at the users operations convenience without bringing down the system. Under system software control individual Ring:0 modules or Ring:1 modules can be deconfigured for card replacement. System software allows on-line disk drawer replacement and automatic resynchronization with current file system state in redundant and mirrored configurations.

### Descriptor.Fault Flag

A cache (e.g., 42A, Figure 2A) sets the descriptor.fault flag when a hardware fault is detected in any data structure associated with the page (descriptor, summary subpage state or data), or during any cache or ring operation corresponding to the page of subpages described by the descriptor. The descriptor.fault flag marks pages which may have been damaged by a hardware fault for later software analysis. Fault containment is achieved by preventing all local or remote SVA access to the damaged page.

### Synchronous Errors

When a cache detects a fault during a sequence for which a processor response is required, the fault is signalled as a synchronous error. The local cache records the fault and signals an exception to the local processor, and if a response packet is required to a remote request, the fault category is signalled in the packet. The processor then signals the corresponding exception. The local cache records the fault category and detailed fault type in control location ctl$ccu_sync_error and the address (SVA or SPA) in control location ctl$ccu_sync_error_addr.

### Asynchronous Errors

When a cache detects a hardware fault while executing a request that does not require a processor response (or it is unknown whether a processor response is required), the fault is signalled as a synchronous error. The local cache records the fault, signals an interrupt to the local processor and if a response packet is required to a remote request, the fault category is signalled in the packet. The local cache records the fault category and detailed fault type in ctl$ccu_async_error and the SVA or SPA in ctl$ccu async_error_addr control locations.

### Fault Recording

Previously detected faults are reported in the packet or locally indicated by descriptor.fault field. All detected faults which affect the correctness of the response packet are signalled with the packet. Faults relating to other subpages within the same page, which are detected after the packet command is transmitted to the Cell Interconnect, are not signalled in the response packet, but are signalled locally. These faults are related to summary1s, summary2s and subpage state fields corresponding to subpage other than the subpage in the packet, which are accessed during packet processing.

Uncorrectable ECC errors are signalled within the response packet by generating bad parity on the corresponding words.

The local cache error locations record the first synchronous and asynchronous errors detected. Coincident faults may be captured by reporting one fault per field. Coincident faults within a single field are reported on a priority basis. Subsequent faults are indicated until the fault indication is cleared, by setting the multiple error flag in the corresponding error location, rather than the error type and address. Reading the corresponding error locations clears the error location and allows the next detected error to be fully recorded.

Hardware faults detected by RRC or Ring Interconnect are recorded in the corresponding request and/or response packet if possible. The RRC also logs each detected fault in an RRC internal error queue. Once a fault other than RRC Fault has been recorded in a packet, the packet is ignored by all caches except the requestor.

### Fault Categories and Packet Fault Fields

Hardware detected faults are broken into five categories for signalling faults locally and within a packet to the detector and requestor caches. The detector also records the detailed fault type. A fault described as signalled locally does not signal any of the five fault categories.

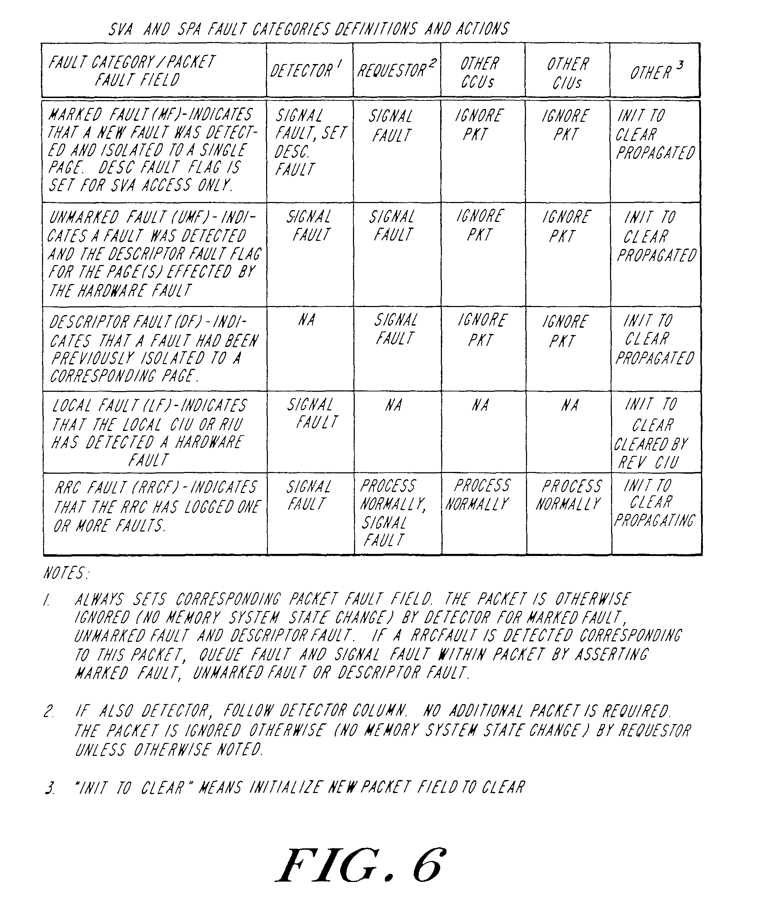

An overview of the fault categories and responses by system 10 is provided in Figure 6.

The fault detector, i.e., the cell that first detected the fault, prioritizes coincident faults in the priority order: previously detected fault signalled in received packet, newly detected DescriptorFault, newly detected UnMarkedFault, newly detected MarkedFault and LocalFault. The requestor signals all faults reported in the response packet. The local Cache sets descriptor.fault, when LocalFault and MarkedFault are simultaneously signalled.

An understanding of the mechanism used by the processing cells and ring routing cells to construct and route response packets may be attained by reference to the aforementioned related patent application, for example, U.S.S.N. 696,291, filed May 20, 1991 (Attorney Docket: KSD-002C2), and U.S.S.N. 499,182, filed March 26, 1990 (Attorney Docket No. KSP-014).

### Marked Faults

A marked fault indicates that a new fault was detected (descriptor.fault flag previously not set) and isolated to the faulting page(s). The detecting cache sets the fault flag within the descriptor corresponding to the faulting page, if the descriptor is available. The fault is reported to the cell which detected the error and to the requesting cell if possible.

The detecting processing cell sets a field within the response packet, the MarkedFault field, is used to signal the fault to the requestor cell. The packet is ignored by cells which process the packet after the fault has been detected and signalled in the packet. Subsequent SVA references to the descriptor or subpages in the detecting cell will signal descriptor_fault of a response is required.

### UnMarked Faults

An unmarked fault indicates that a new fault was detected (descriptor.fault flag previously not set), but was not isolated to the faulting page. The fault is reported to the cell which detected the error, and to the requesting cell if possible.

The detecting processing cells sets the UnMarkedFault field in the response packet to signal the fault to the requestor cell. The packet is ignored by cells which process the packet after the fault has occurred. Since the fault could not be contained to a page(s) within the detecting cell, an unknown number of pages might be damaged. Integrity is only guaranteed for pages for which OwnerLimit prevented the Ring:0 which detected the error from gaining ownership.

### Descriptor Faults

A descriptor fault indicates that a fault has been previously detected, as indicated by descriptor.fault flag corresponding to the page being set. The fault is reported to the requesting cell through the packet DescriptorFault field. The packet is ignored by cells which process the packet after the fault has been signalled in the packet.

### Local Faults

A local fault indicates that the local Cell Interconnect (CIUs) or Routing Interconnect (RIUs) has detected a fault in a Ring packet or while processing a Ring packet. The detecting cache (e.g., 42A) signals this fault within the local cell only. The cell interconnect (e.g., 22F) also appropriately sets either Marked or UnMarkedFault.

The local cache sets descriptor.fault, when LocalFault and MarkedFault are simultaneously signalled. The cell interconnect or routing interconnect (e.g., 32D of Figure 1) always shortens the copied or extract packet corresponding to the LocalFault.

A non-requesting cell, or a cell without a pending request, for a datum contained in a response packet might not copy or extract the packet if its extract FIFO is full. The original requestor always copies or extracts the packet based on either SVA match if address has correct parity or RequestId match if RequestId has correct parity. A cell with a pending request might copy or extract the packet based on SVA match if address has correct parity. If all extract FIFOs are temporarily full, the packet would be emptied as a timestamp error and fault signalled as a requestor time-out.

### RRC Faults

An RRC fault indicates that the RRC is signalling that it has one or more entries recorded in its fault queue. RRCFault does not necessarily indicate that a fault has been detected while processing the specific packet in which the RRCFault field is set.

A requesting cell that receives the response packet with RRCFault set processes the packet normally, but signals an RRCFault. The packet is processed normally by other cells. The RRC will signal a MarkedFault (RRC sets a descriptor.fault bit within RRC directory), UnMarked Fault or DescriptorFault if the RRC fault prevents successful completion of this request or might damage a subpage or page.

### Fault Itemization

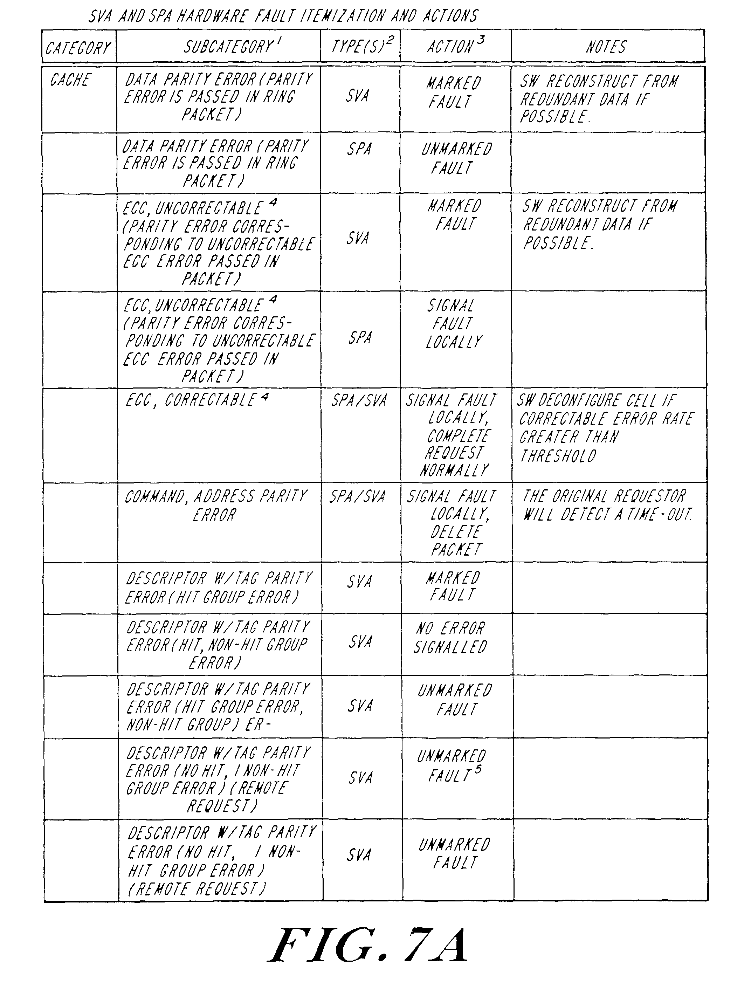

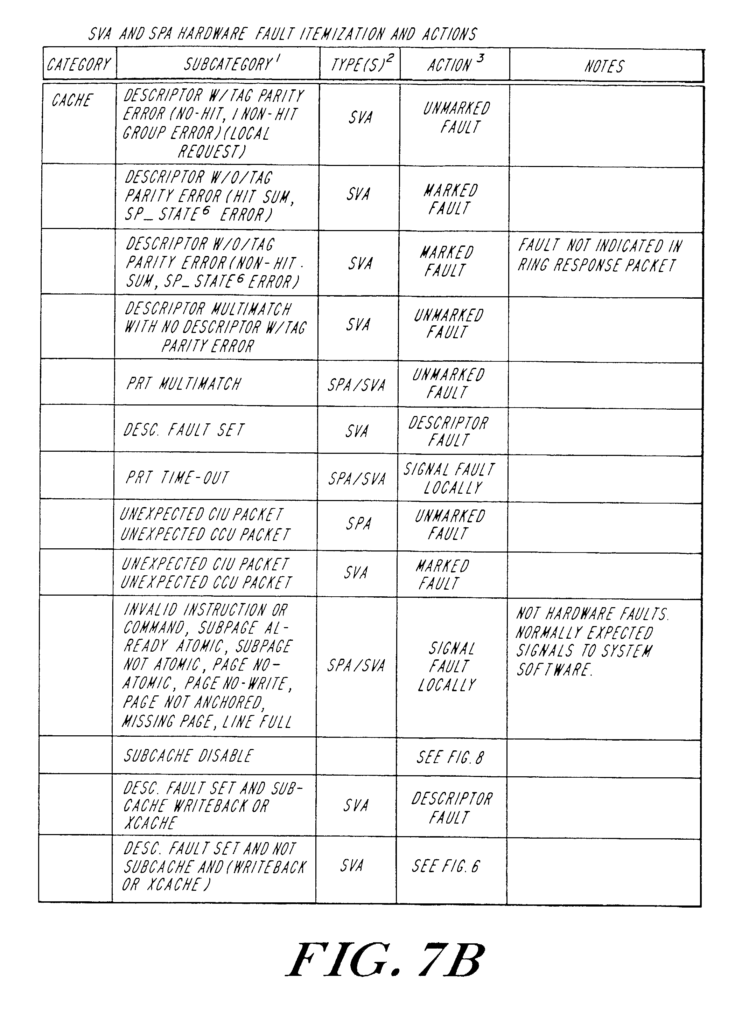

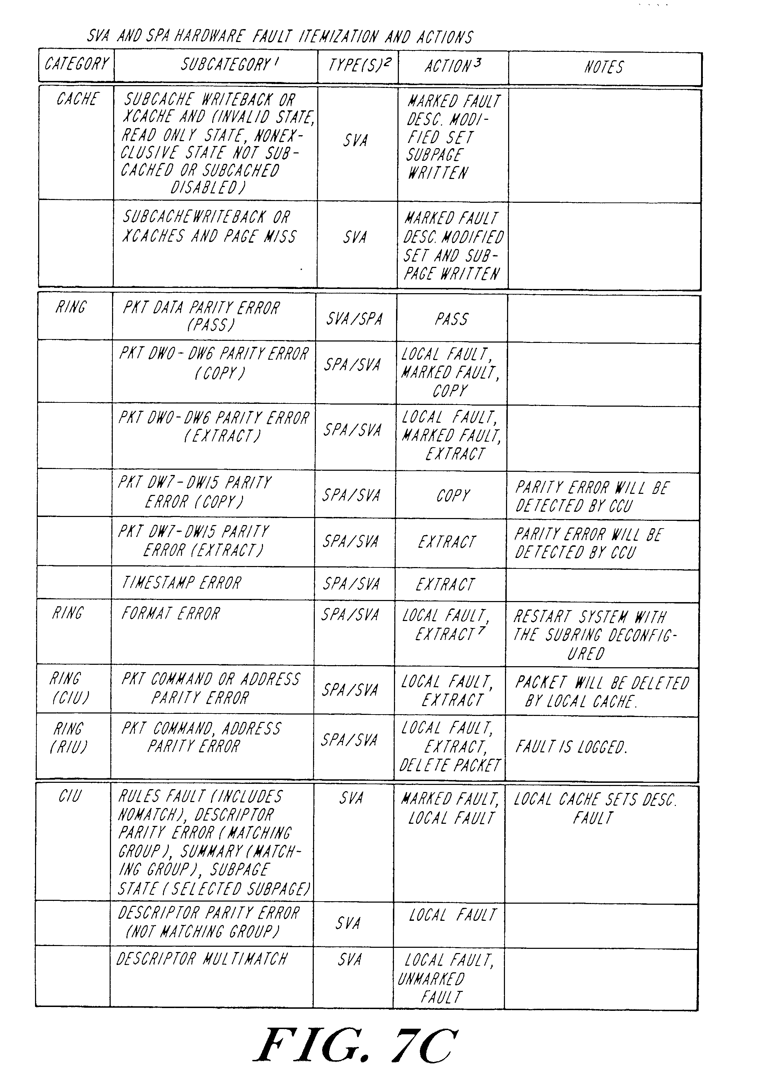

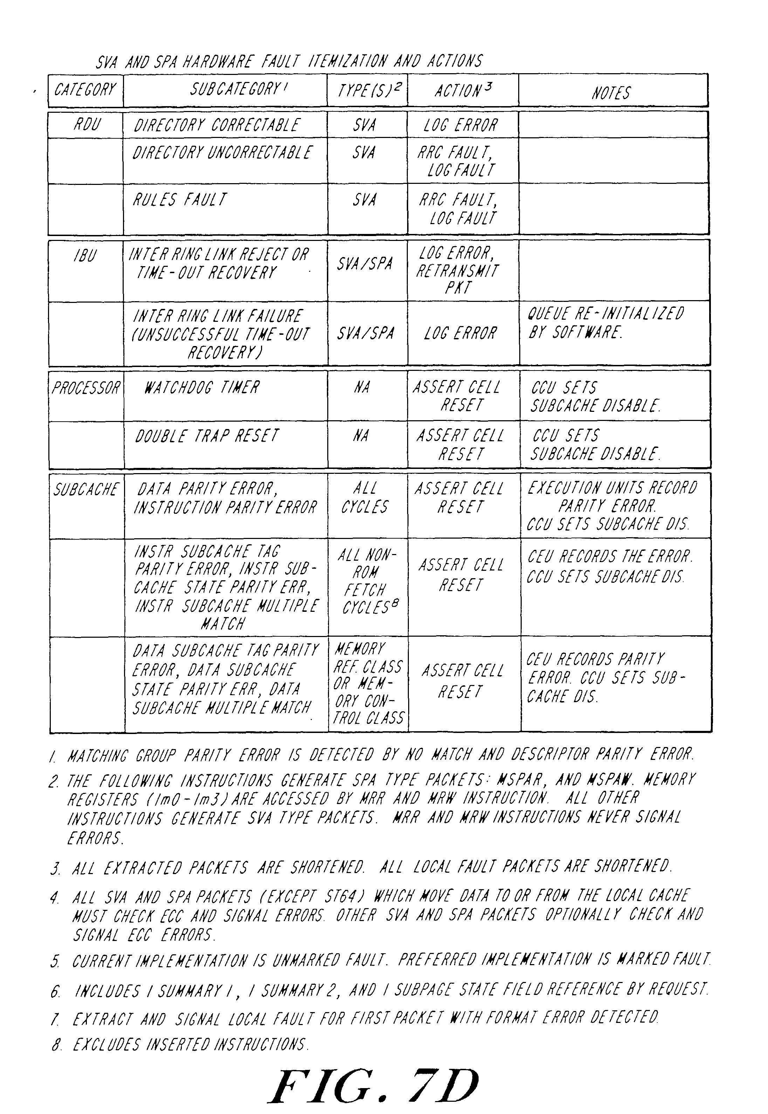

Figure 7 more completely details the faults and actions taken by system 10 in response to detected errors. As noted in the illustration, if a fault is detected during an allocate sequence, the sequence is aborted and the fault is signalled as indicated in Figure 7.

### Memory System Fault Containment

The local Cache achieves fault containment by freezing all directory data structures and subpage data which might have been damaged by the hardware fault. Freezing is accomplished by preventing all SVA access to the potentially damaged pages. Two mechanisms are used for fault containment, descriptor.fault flag and subcache disable flag.

### Descriptor.Fault Marking

The descriptor.fault flag marks pages which may have been damaged by a hardware fault for later software analysis. This flag is set by the local cache when it detects a fault in any data structure, cache operation or ring operation corresponding to the page or subpages described by the descriptor. Fault containment is achieved by preventing all local or remote SVA access to the damaged page. The cache signals a descriptor_fault error in the packet or to the local processor, on any processor or ring reference to the page or subpages corresponding to the descriptor.

### SubCacheDisable Field

Each processor (e.g., 42A) includes and associated subcache (not shown) that stores data currently being accessed by the processor. A processing cell contains processor and subcache faults by disabling local cache access to the subcache when a subcache or processor fault is detected by the processor or when the cache detects a fault which might leave the subcache incoherent with respect to the Cache (for example subcache invalidate failure).

Local and remote cache access to the subcache are enabled by the SubCacheDisable field in ccu_master_config location. SubCacheDisable is set by assertion of CellReset, RingReset or failure of CCU originated inserted instruction sequence. CellReset is asserted when a subcache hardware fault is detected, watchdog timer expiration or double trap reset. SubCacheDisable is guaranteed to be asserted prior to any data which might have been damaged from the subcache hardware fault leaving being passed to the Cache or XIO Bus. SubCacheDisable is set or cleared by SPA access from local or remote cell.

When clear, SubCacheDisable enables the Local Cache to issue inserted instructions to the subcache. CCU inserted instructions are used to deliver subcache invalidate and xtrap sequences to the processor. When set, the CCU is disabled from issuing subcache invalidate requests to the subcache and subcache coherency is not maintained. The CCU signals DescriptorFault to any remote request, for which only the subcache contains the correct subpage data. The subcached state is ignored for the remaining cases where the Local Cache contains the correct data. Since subcache coherency is not maintained when SubCacheDisable is set, SubCacheDisable must be clear prior to subcaching of any subpage.

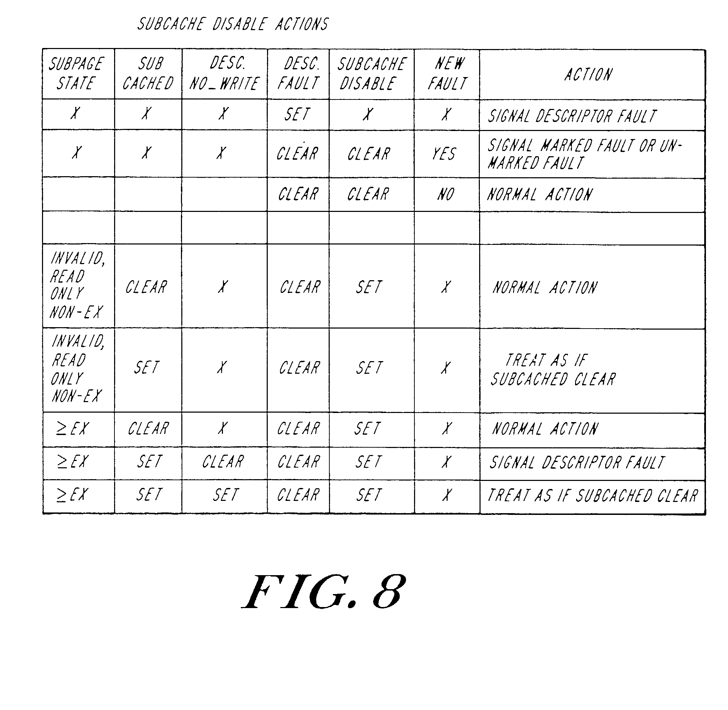

Figure 8 specifies SubCacheDisable actions taken by the processing cells of the illustrated system 10. It will be noted that the descriptor.fault flag is not set by any of the actions specified in that table.

SubcacheDisable is ignored for processor requests to the Local Cache which do not require an inserted instruction sequence. Memory control instructions mflsp, mrcsp, rsp and pstsp have exceptional behavior when SubcacheDisable is set and the referenced subpage is subcache, since an inserted instruction sequence is required.

The subcache must not be accessed by memory reference instruction when Subcache Disable has been asserted, until the subcache has been cleaned up. An example of undesirable behavior after an error has occurred would be: implied subcache actions such as write backs could writeback a stale subpage into the cache and turn off subcached, thus injecting a stale subpage into the cache without any error being noted.

### SubCache Hardware Faults

The following subcache hardware faults cause SubCacheDisable to be asserted. This assertion is guaranteed prior to any data being passed to the Cache or XIO Bus which might have been damaged from the subcache hardware fault leaving: Subcache Instruction Bus parity error; Subcache Data Bus parity error; Instruction Cache Group parity error; Data Cache Group parity error; Instruction Subcache multimatch; Data Subcache multimatch; Instruction Subblock State parity error; and Data Subblock State parity error.

### Summary

The foregoing describes an improved digital data processing apparatus meeting the aforementioned objects. Particularly, it describes a distributed memory multiprocessor system capable of detecting and containing faults.

Those skilled in the art will appreciate that the embodiments described above are exemplary only, and that other apparatuses and method -- including modifications, additions and deletions -- fall within the scope of the invention.

By way of example, it will be appreciated that a digital data processing system constructed in accord with the invention include additional fault detection mechanisms, apart from the parity and ECC mechanisms, among others, described above.

It will also be appreciated that the techniques and apparatus described and claimed herein are applicable to digital data apparatus other than the illustrated multiprocessor system.

## Claims

1. A digital data processing apparatus comprising a plurality of processing cells (18A, FIG. 1) interconnected by a network (20A-20F, FIG. 1),
each processing cell each including a processor (40A-40C, FIG. 2A) for processing data, at least one of said processing cells further including a memory means (42A-42C, FIG. 2A) for storing data, the processor of at least one processing cell including request generation means (50A-50C, FIG. 2A) for, as a requesting processor, generating an access request requesting access to a data item stored in said memory means and for transmitting that request over a network,
said memory means including response means (52A-52C, FIG. 2A) responsive to a request for generating a response,
said network means being coupled to said processing cells for transferring requests and responses thereamong,
characterized in that said response means (52A-52C, FIG. 2A) of said memory means includes
A. fault detection means for determining whether a fault exists in connection with a at least one of accessing and transmitting the requested data item, and, in response to a negative determination, enabling said memory means to transmit a response including the requested data item over the network means; and
B. fault containment means responsive to a positive determination by the fault detection means, for enabling said memory means to include a fault indication in the response.

2. A digital data processing apparatus as defined in claim 1 in which a fault indication in a response inhibits the requesting processor from using a data item therein.

3. A digital data processing apparatus as defined in claim 2 in which a plurality of said processing cells each include respective memory means, the memory means of each of said processing cells including response means responsive to a request received from the network for generating a response, the response means of each said memory means including
A. fault detection means for determining whether a fault exists in connection with a at least one of accessing and transmitting the requested data item, and, in response to a negative determination, enabling the respective memory means to transmit a response including the requested data item over the network means; and
B. fault containment means responsive to a positive determination by the fault detection means, for enabling the respective memory means to include a fault indication in the response.

4. A digital data processing apparatus according to claim 1, in which
A. at least one processor includes
i) means (Descriptors, FIG. 5) for storing a status relating to a data item, and
ii) means for normally responding to at least selected ones of said responses for updating said status, and
B. said fault containment means includes means for disabling that other processing cell from processing a response that includes said fault indication.

5. A digital data processing apparatus according to claim 4 in which said at least one processor is a processor other than said requesting processor.

6. A digital data processing apparatus according to claim 1, in which
A. at least one said processing cell includes subcache means (62, FIG. 4) coupled to the associated processor for storing data,
B. said memory means includes
i) cache memory means (72A, 72B, FIG. 4) for storing data,
ii) control means (74A, 74B, FIG. 4) coupled to said subcache means and said cache memory means for performing an access operation in connection with said cache memory means, said control means responding to a fault in connection with accessing of at least one of said subcache means and said cache memory means for preventing the transfer of data therebetween.

7. A digital data processing apparatus according to claim 1, in which at least one of said requesting processor and said response means includes means responsive to said fault indication for initiating analysis of said fault.

8. A digital data processing apparatus according to claim 1, in which
A. each of at least selected ones of said data items are associated with a descriptor ("Descriptor," FIG. 5) by which that data is referenced, and
B. said memory means further includes means for modifying, in the event of a fault, the descriptor associated with a requested data item to reflect such fault.

9. A digital data processing apparatus according to claim 1, in which said fault detection means includes at least one of:
A. marked fault means for responding to a newly detected fault isolated to the requested data item for generating said response to include fault indication representative of a fault in a first fault category,
B. unmarked fault means for responding to a fault that is not isolated to the requested data item for generating said response to include a fault indication representative of a fault in a second fault category,
C. descriptor fault means for responding to a request for a data item for which a fault had previously been detected for generating said response to include a fault indication representative of a fault in a third fault category,
D. local fault means for responding to a fault by the associated memory means in transmitting said response on said network means for generating said response to include a fault indication representative of a fault in a fourth category, and
E. remote fault means for responding to a fault indication led by said network means for generating said response to include a fault indication representative of a fault in a fifth category.

10. A digital data processing apparatus as defined in claim 1 in which a plurality of processing cells each include a respective memory means, each memory means being responsive to a request received from said network for performing a memory access operation to perform at least one of storing data received in a response therein or retrieving data therefrom for transfer in a response.

11. A digital data processing apparatus according to claim 10, in which
A. each said data item is associated with an address ("SystemVirtual Address," FIG. 5) by which that data item is referenced, and wherein the addresses associated with the data stored in said plurality of memory means comprise a single virtual address space,
B. said request generating means generating said access requests specifying the address associated with the requested data item, and
C. at least said responding memory means includes means selectively responsive to said specified address for accessing the requested data item therein.

12. A digital data processing apparatus according to claim 10, in which a said processing cell further includes means responsive to a response received thereby which includes a said fault indication for preventing storage in its memory means of the data item contained in that response.

13. A digital data processing apparatus according to claim 12, in which at least one processing cells comprises
A. means for storing status information ("Descriptor," FIG. 5) relating to a data item in a response,
B. means for normally updating the status information for a data item in response to transfer of a response containing that data item, and
C. means responsive to said fault indication in a response containing that data item for preventing updating of the status information for that data item.

14. A digital data processing apparatus according to claim 13 in which said at least one processing cell comprises a said processing cell other than the processing cell whose memory means generates a response.

15. A digital data processing apparatus according to claim 10, in which at least one of said processing cells includes fault analysis means responsive to a said fault indication for initiating analysis of said fault.

16. A digital data processing apparatus according to claim 7, in which
A. at least one said processing cell includes subcache means (62, 64, FIG. 4) coupled to the associated processor for storing data for processing thereby,
B. said memory means includes
i) cache memory means (72A, 72B, FIG. 4) for storing data,
ii) control means (74A-74D, FIG. 4) coupled to said subcache means and said cache memory means for accessing in said cache memory means at least selected data requested by the associated processor,
C. said control means responding to at least selected faults in operation of at least one of said subcache means and said cache memory means for preventing the transfer of data therebetween.

17. A digital data processing apparatus according to claim 10, in which at least said responding memory means includes
A. directory means (56A-56C, FIG. 2A; FIG. 5) for storing a fault flag, associated with a corresponding data item, which fault flag is not set in the absence of fault in that data item, and
B. said fault-detection means includes means responsive to at least a selected fault condition associated with that data item for setting that fault flag.

18. A digital data processing apparatus according to claim 10, in which at said fault-detection means of least said responding memory means includes marking means responsive to a fault condition for including in a response a fault indication representative thereof.

19. A digital data processing apparatus according to claim 18, in which
A. said fault-detection means includes means for detecting a selected fault condition isolated to a data item not previously detected as faulty, and
B. said marking means is responsive to that fault condition for including in the response transferring that data item a marked fault indication representative of said fault condition.

20. A digital data processing apparatus according to claim 18, in which
A. said fault-detection means includes means for detecting a selected fault condition relating to a data item not previously detected as faulty, which fault is not isolated to that data item, and
B. said marking means is responsive to that fault condition for including in the response transferring that data item an unmarked fault indication representative of said fault condition.

21. A digital data processing apparatus according to claim 18, in which
A. said fault-detection means includes means for detecting a request for access to a data item previously detected as faulty, and
B. said marking means is responsive to such detection for including, in the response transferring that data item, a descriptor fault indication indicating that the request was made for a data item previously detected as faulty.

22. A digital data processing apparatus according to claim 18, in which
A. requests and responses are transferred in the form of packets,
B. said network means includes (i) bus means (20A-20F, FIG. 1) for carrying said packets, and (ii) a plurality of control means (22A-22R, FIG. 1), each coupled to a respective one of said memory means and to said bus means, for selectively transferring said packets therebetween,
C. said fault-detection means includes means for detecting a fault in the transfer of a packet by said control means, and
D. said marking means is responsive to that fault condition for including in that packet a local fault indication representative of said fault condition.

23. A digital data processing apparatus according to claim 18, in which
A. requests and responses are transferred in the form of packets,
B. said bus means includes
i) a plurality of segment means (20A-20F, FIG. 1) each for carrying said packets, and
ii) routing means ("Cell Interconnect" 22A-22R, FIG. 1, FIG. 3) coupled to respective pairs of said segment means for selectively transferring packets therebetween,
C. said fault-detection means includes means for detecting a fault in the transfer of a packet by said routing means, and
D. said marking means is responsive to that fault condition for including in that packet a remote fault indication representative of said fault condition.

24. A digital data processing apparatus according to claim 18, in which
A. at least said responding memory means includes directory means for storing a fault flag, associated with a corresponding data item, which fault flag is not set in the absence of fault in that data item, is not set, and
B. said fault-detection means includes means for detecting a selected fault condition isolated to a data item not previously detected as faulty, and
C. said marking means is responsive to that fault condition for setting the fault flag corresponding to that data item.

25. A digital data processing apparatus according to claim 24, in which
A. responses are transferred in the form of packets,
B. said fault-detection means includes means for detecting a request for access to a data item for which the corresponding fault flag is set, and
C. said marking means includes in the packet transferring that data item a descriptor fault indication indicating that the request was made for a data item previously detected as faulty.

26. A method of operating a digital data processing apparatus comprising a plurality of processing cells interconnected by a network,
each processing cell each including a processor for processing data, at least one of said processing cells further including a memory means for storing data, the processor of at least one processing cell including request generation means for, as a requesting processor, generating an access request requesting access to a data item stored in said memory means and for transmitting that request over a network,
said memory means including response means responsive to a request for generating a response,
said network means being coupled to said processing cells for transferring requests and responses thereamong,
the method being characterized in that in comprises the steps of
A. enabling said memory means to determine whether a fault exists in connection with a at least one of accessing and transmitting the requested data item, and, in response to a negative determination, enabling said memory means to transmit a response including the requested data item over the network means; and
B. responsive to a positive determination that a fault exists, enabling said memory means to include a fault indication in the response.

27. A method as defined in claim 26 further characterized in that a fault indication in a response inhibits the requesting processor from using a data item therein.

28. A method as defined in claim 27, in which the digital data processing apparatus comprises a plurality of said processing cells each include respective memory means, the memory means of each of said processing cells including response means responsive to a request received from the network for generating a response, the method includeing the steps of
A. enabling said memory means to determine whether a fault exists in connection with a at least one of accessing and transmitting the requested data item, and, in response to a negative determination, enabling the respective memory means to transmit a response including the requested data item over the network means; and
B. responsive to a positive determination that a fault exists, enabling the respective memory means to include a fault indication in the response.

29. A method according to claim 26, which further comprises the steps of
A. storing, within at least one memory means other than said requesting processor, a status relating to a data item, and normally responding to at least selected ones of said responses for updating said status, and
B. disabling that other processing cell from processing a response that includes said fault indication.

30. A method according to claim 26, wherein each of at least one processor is associated with a respective one of said memory means, said processor and associated memory being referred to as a processing cell, and said method further comprises the steps of
A. providing said processing cell with subcache means coupled to the associated processor for storing data for processing thereby,
B. providing said memory means with cache memory means for storing data, and control means coupled to said subcache means and said cache memory means for accessing, absent fault, in said cache memory means at least selected data requested by the associated central processor, and
C. responding to a fault in operation of at least one of said subcache means and said cache memory means for preventing the transfer of data therebetween.

31. A method according to claim 26, which it comprises the step of responding to said fault indication for initiating analysis of said fault.

32. A method according to claim 26, wherein each of at least selected ones of said data are associated with a descriptor by which that data item is referenced, and the method further comprises the step of modifying, in the event of a fault, the descriptor associated with a requested data item to reflect such fault.

33. A method according to claim 26, further comprising the steps of
A. detecting a fault in connection with at least one of the accessing and transmitting of said requested data item, and
B. selectively executing, in response to such detection, at least one of the following steps
i) responding to a newly detected fault isolated to the requested data item for generating said response to include fault indication representative of a fault in a first fault category,
ii) responding to a fault that is not isolated to the requested data item for generating said response to include a fault indication representative of a fault in a second fault category,
iii) responding to a request for a data item for which a fault had previously been detected for generating said response to include a fault indication representative of a fault in a third fault category,
iv) responding to a fault by the associated memory means in transmitting said response on said network means for generating said response to include a fault indication representative of a fault in a fourth category, and
v) responding to a fault indication led by said network means for generating said response to include a fault indication representative of a fault in a fifth category.

34. A method as defined in claim 26, wherein a plurality of said processing cells each include a respective memory means, and the method further includes the step of enabling each said memory means to respond to a request received from said network for performing a memory access operation to perform at least one of storing data received in a response therein or retrieving data therefrom for transfer in a response.

35. A method according to claim 34, wherein each said data item is associated with an address by which that data item is referenced, and wherein the addresses associated with the data stored in said plurality of memory elements comprise a single virtual address space, and the method further comprises the steps of
A. generating said request for access specifying the address associated with the requested data item, and
B. selectively responding to said specified address for accessing the requested data item therein.

36. A method according to claim 34, which further comprises the step of responding to a selected response including said fault indication for preventing storage in that memory means of the data item contained in that response.

37. A method according to claim 29, which further comprises the steps of
A. storing a status relating to a data item in a response,
B. normally updating that status in response to transfer of a response containing that data item, and
C. responding to said fault indication in a response containing that data item for preventing updating of that status.

38. A method according to claim 34, which further comprises the step of responding to said fault indication for initiating analysis of said fault.

39. A method according to claim 34, which further comprises the steps of
A. storing a fault flag, associated with a corresponding data item, which fault flag is not set in the absence of fault in that data item, and
B. responding to at least a selected fault condition associated with that data item for setting that fault flag.

40. A method according to claim 34, which further comprises the steps of
A. detecting at least a selected fault in connection with the access of a data item and the transfer thereof in said response, and
B. responding to such fault condition for including in that response a fault indication representative thereof.

41. A method according to claim 40, which further comprises the steps of
A. detecting a selected fault condition isolated to a data item not previously detected as faulty, and
B. responding to that fault condition for including in the response transferring that data item a marked fault indication representative thereof.

42. A method according to claim 40, which further comprises the steps of
A. detecting a selected fault condition relating to a data item not previously detected as faulty, which fault is not isolated to that data item, and
B. responding to that fault condition for including in the response transferring that data item an unmarked fault indication representative thereof.

43. A method according to claim 40, which further comprises the steps of
A. detecting a request for access to a data item previously detected as faulty, and
B. responding to such detection for including, in the response transferring that data item, a descriptor fault indication indicating that the request was made to a data item previously detected as faulty.

44. A method according to claim 40, which further comprises the steps of
A. enabling requests and responses to be transferred in the form of packets,
B. providing said network means with (i) bus means for carrying said packets, and (ii) a plurality of control means, each coupled to a respective one of said memory means and to said bus means, for selectively transferring said packets therebetween,
B. detecting a fault in the transfer of a packet by said control means, and
C. responding to that fault condition for including in that packet a local fault indication representative thereof.

45. A method according to claim 40, which further comprises the steps of
A. enabling requests and responses to be transferred in the form of packets,
B. providing said bus means with a plurality of segment means each for carrying said packets, and routing means coupled to respective pairs of said segment means for selectively transferring packets therebetween,
C. detecting a fault in the transfer of a packet by said routing means, and
D. responding that fault condition for including in that packet a remote fault indication representative thereof.

46. A method according to claim 40, which further comprises the steps of
A. storing a fault flag, associated with a corresponding data item, which fault flag is not set in the absence of fault in that data item, is not set, and
B. detecting a selected fault condition isolated to a data item not previously detected as faulty, and
C. responding to that fault condition for setting the fault flag corresponding to that data item.

47. A method according to claim 46, further characterized in that it comprises the steps of
A. enabling responses to be transferred in the form of packets,
B. detecting a request for access to a data item for which the corresponding fault flag is set, and
C. responding to that detection for including in the packet transferring that data item a descriptor fault indication indicating that the request was made for a data item previously detected as faulty.

## Patentansprüche

1. Digitale Datenverarbeitungsvorrichtung mit mehreren Verarbeitungszellen (18A, Fig. 1), die über ein Netzwerk (20A bis 20F, Fig. 1) miteinander verbunden sind, wobei:
jede Verarbeitungszelle jeweils einen Prozessor (40A bis 40C, Fig. 2A) zum Verarbeiten von Daten enthält, zumindest eine von den Verarbeitungszellen ferner eine Speichereinrichtung (42A bis 42C, Fig. 2A) zum Speichern von Daten enthält, der Prozessor zumindest einer Verarbeitungezelle eine Anforderungaerzeugungseinrichtung (50A bis 50C, Fig. 2A) enthält, um als ein anfordernder Prozessor eine einen Zugriff auf ein in der Speichereinrichtung gespeichertes Datenelement anfordernde Zugriffsanforderung zu erzeugen, und um diese Anforderung über ein Netzwerk zu übertragen,
die Speichereinrichtung eine auf eine Anforderung reagierende Antworteinrichtung (52A bis 52C) zum Erzeugen einer Antwort enthält,
die Netzwerkeinrichtung mit den Verarbeitungszellen zum Übertragen von Anforderungen und Antworten zwischen diesen verbunden ist,
dadurch gekennzeichnet, daß die Antworteinrichtung (52A bis 52C, Fig. 2A) der Speichereinrichtung enthält;
A. eine Fehlerdetektionseinrichtung, um zu ermitteln, ob ein Fehler im Zusammenhang zumindest entweder mit dem Zugriff auf das oder der Übertragung des angeforderte(n) Datenelemente(s) vorliegt, und um der Speichereinrichtung als Reaktion auf eine negative Ermittlung das Übertragen einer das angeforderte Datenelement enthaltenden Antwort über die Netzwerkeinrichtung zu ermöglichen; und
B. eine auf eine positive Ermittlung der Fehlerdetektionseinrichtung reagierende Fehlereindämmungseinrichtung, um der Speichereinrichtung das Einfügen einer Fehleranzeige in der Antwort zu ermöglichen.

2. Digitale Datenverarbeitungsvorrichtung nach Anspruch 1, in welcher eine Fehleranzeige in einer Antwort den anfordernden Prozessor daran hindert, das Datenelement darin zu verwenden.

3. Digitale Datenverarbeitungsvorrichtung nach Anspruch 2, in welcher mehrere Verarheitungazellen jeweils eine entsprechende Speichereinrichtung enthalten, wobei die Speichereinrichtung von jeder dieser Verarbeitungezellen eine Antworteinrichtung enthält, die auf eine aus dem Netzwerk empfangene Anforderung durch Erzeugen einer Antwort reagiert, und *die* Antworteinrichtung jeder Speichereinrichtung enthält:
A. eine Fehlerdetektionseinrichtung, um zu ermitteln, ob ein Fehler im Zusammenhang zumindest entweder mit dem zugriff auf das oder der Übertragung des angeforderte(n) Datenelemente(s) vorliegt, und um als Reaktion auf eine negative Ermittlung der Speichereinrichtung das Übertragen einer das angeforderte Datenelement enthaltenden Antwort über die Netzwerkeinrichtung zu ermöglichen; und
B. eine auf eine positive Ermittlung der Fehlerdetektionseinrichtung reagierende Fehlereindämmungseinrichtung, um der entsprechenden Speichereinrichtung das Einfügen einer Fehleranzeige in der Antwort zu ermöglichen.

4. Digitale Datenverarbeitungavorrichtung nach Anspruch 1, in welcher,
A. zumindest ein Prozessor enthält:
i) eine Einrichtung (Deskriptoren, Fig. 5) zum Speichern eines ein Datenelement betreffenden Status; und
ii) eine Einrichtung, um normal auf zumindest eine ausgewählte von den Antworten zum Aktualisieren des Status zu reagieren, und
B. die Fehlereindämmungseinrichtung eine Einrichrung enthält, um diese andere Verarbeitungszelle an der Verarbeitung einer Anwort zu hindern, die die Fehleranzeige enthält.

5. Digitale Datenverarbeitungsvorrichtung nach Anspruch 4, in welcher zumindest ein Prozessor ein anderer Prozessor als der anfordernde Prozessor ist.

6. Digitale Datenverarbeitungsvorrichtung nach Anspruch 1, in welcher:
A. zumindest eine Verarbeitungszelle eine mit dem zugeordneten Prozessor verbundene Subcache-Einrichtung (62, Fig. 4) zum Speichern von Daten enthält,
B. die Speichereinrichtung enthält:
i) eine Cache-Speichereinrichtung (72A, 72B, Fig. 4) zum Speichern von Daten,
ii) eine mit der Subcache-Rinrichtung und der Cache-Einrichtung verbundene Steuereinrichtung (74A, 74B, Fig. 4) zum Durchführen einer Zugriffsoperation in Zusammenhang mit der Cache-Speichereinrichtung, wobei die Steuereinrichtung auf einen Fehler in Zusammenhang mit dem Zugriff auf zumindest entweder die Subcache-Einrichtung oder die Cache-Speichereinrichtung reagiert, um die Übertragung von Daten dazwischen zu verhindern.

7. Digitale Datenverarbeitungsvorrichtung nach Anspruch 1, in welcher zumindest entweder der anfordernde Prozessor oder die Antworteinrichtung eine Einrichtung enthält, die auf die Fehleranzeige reagiert, um eine Analyse des Fehlers zu initialisieren.

8. Digitale Datenverarbeitungsvorrichtung nach Anspruch 1, in welcher:
A. jedem von zumindest selektierten von einzelnen Datenelementen ein Deskriptor ("Deecriptor", Fig. 5) zugeordnet ist, durch welchen diese Daten bezeichnet sind, und
B. die Speichereinrichtung ferner eine Einrichtung enthält, um im Falle eines Fehlers den einem angeforderten Datenelement zugeordneten Deskriptor zu modifizieren, um einen solchen Fehler zu kenntlich zu machen.

9. Digitale Datenverarbeitungevorrichtung nach Anspruch 1, in welcher die Fehlerdetektionseinrichtung zumindest eine von den Einrichtungen enthält;
A. eine Einrichtung für markierte Fehler, um auf einen neu detektierten Fehler, der auf das angeforderte Datenelement beschränkt ist, durch Erzeugung einer Antwort zu reagieren, die eine für einen Fehler in einer ersten Fehlerkategorie repräsentative Fehleranzeige enthält,
B. eine Einrichtung für nicht markierte Fehler, um auf einen Fehler, der nicht auf das angeforderte Datenelement beschränkt ist, durch Erzeugung einer Antwort zu reagieren, die eine für einen Fehler in einer zweiten Fehlerkategorie repräsentative Fehleranzeige enthält,
C. eine Einrichtung für Deskriptorfehler, um auf eine Anforderung eines Datenelementes, für welches zuvor ein Fehler detektiert wurde, durch Erzeugung einer Antwort zu reagieren, die eine für einen Fehler in einer dritten Fehlerkategorie repräsentative Fehleranzeige enthält,
D. eine Einrichtung für lokale Fehler, um auf einen Fehler durch die zugeordnete Speichereinrichtung bei der Übertragung auf die Netzwerkeinrichtung, durch Erzeugung einer Antwort zu reagieren, die eine für einen Fehler in einer vierten Fehlerkategorie repräsentative Fehleranzeige enthält, und
E. eine Einrichtung für entfernt auftretende Fehler, um auf eine von der Netzwerkeinrichtung übertragene Fehleranzeige durch Erzeugung einer Antwort zu reagieren, die eine für einen Fehler einer fünften Fehlerkategorie repräsentative Fehleranzeige enthält.

10. Digitale Datenverarbeitungsvorrichtung nach Anspruch 1, in welcher mehrere verarbeitungszellen jeweils eine entsprechende Speichereinrichtung enthalten, wobei jede Speichereinrichtung auf eine von der Netzwerkeinrichtung empfangene Anforderung zur Ausführung einer Speicherzugriffsoperation so reagiert, daß sie mindestens entweder in einer Antwort empfangene Daten darin speichert, oder Daten daraus zur Übertragung in einer Antwort ausliert,

11. Digitale Datenverarbeitungsvorrichtung nach Anspruch 10, in welcher:
A. jedem Datenelement eine Adresse ("SystemVirtual Address", Fig. 5) zugeordnet ist, durch welche dieses Datenelement bezeichnet ist, und wobei die den in den mehreren Speichereinrichtungen gespeicherten Daten zugeordneten Adressen einen einzigen virtuellen Adressraum aufweisen,
B. die Anforderungserzeugungeeinrichtung die Zugriffsanforderungen erzeugt, welche die dem angeforderten Datenelement zugeordnete Adresse Spezifizieren, und
C. zumindest die antwortende Speichereinrichtung eine Einrichtung enthält, die selektiv auf die spezifizierte Adresse für einen Zugriff auf das darin gespeicherte Datenelement reagiert.

12. Digitale Datenverarbeitungsvorrichtung nach Anspruch 10, in welcher eine Verarheitungszelle ferner eine Einrichtung enthält, die auf eine dadurch empfangene Antwort, welche eine Fehleranzeige enthält, reagiert, indem sie die Speicherung des in dieser Antwort enthaltenen Datenelementes in ihrer Speichereinrichtung verhindert.

13. Digitale Datenverarbeitungsvorrichtung nach Anspruch 12, in welcher mindestens eine Verarheitungazelle aufweist:
A. eine Einrichtung zum Speichern von Statusinformation ("Descriptor". Fig. 5), die ein Datenelement in einer Antwort betrifft,
B. eine Einrichtung, um normalerweise die Statusinformation für ein Datenelement als Reaktion auf die Übertragung einer dieses Datenelement enthaltenden Anwort zu aktualisieren, und
C. eine Einrichtung, die auf die Fehleranzeige in einer dieses Datenelement enthaltenen Antwort reagiert, indem sie das Aktualisieren der Statusinformation für dieses Datenelement verhindert.

14. Digitale Datenverarbeitungavorrichtung nach Anspruch 13, in welcher zumindest eine Verarbeitungszelle eine andere Verarheitungezelle als die Verarbeitungszelle aufweist, deren Speichereinrichtung eine Antwort erzeugt.

15. Digitale Datenverarbeitungsvorrichtung nach Anspruch 10, in welcher zumindest eine von den Verarbeitungszellen eine Fehleranalyseeinrichtung enthält, die auf eine Fehleranzeige reagiert, indem sie eine Analyse des Fehlers initialisiert.

16. Digitale Datenverarbeitungevorrichtung nach Anspruch 7, in welcher:
A. zumindest eine Verarbeitungszelle eine Subcache-Einrichtung (62, 64, Fig. 4) enthält, die mit dem zugeordneten Prozessor verbunden ist, um Daten zur Verarbeitung durch diesen zu speichern,
B. die Speichereinrichtung enthält
i) eine Cache-Speichereinrichtung (72A, 72B, Fig. 4) zum Speichern von Daten,
ii) eine mit der Subcache-Einrichtung und der Cache-Einrichtung verbundene Steuereinrichtung (74A bis 74D, Fig. 4) zum Zugreifen in der Cache-Speichereinrichtung auf zumindest von dem zugeordneten Prozessor angeforderte selektierte Daten,
C. wobei die Steuereinrichtung zumindest auf selektierte Fehler im Betrieb zumindest entweder der Subcache-Einrichtung oder der Cache-Speichereinrichtung reagiert, indem sie die Übertragung von Daten zwischen diesen verhindert.

17. Digitale Datenverarbeitungsvorrichtung nach Anspruch 10, in welcher zumindest die antwortende Speichereinrichtung enthält:
A. eine Verzeichniseinrichtung (56A bis 56C, Fig. 2A; Fig. 5) zum Speichern eines Fehler-Flag's, das einem entsprechenden Datenelement zugeordnet ist, dessen Fehler-Flag bei Fehlen eines Fehlers in diesem Datenelement nicht gesetzt wird, und
B. die Fehlerdetektionseinrichtung eine Einrichtung enthält, die zumindest auf einen diesem Datenelement zugeordneten selektierten Fehlerzustand reagiert, indem sie das Fehler-Flag setzt.

18. Digitale Datenverarbeitungsvorrichtung nach Anspruch 10, in welcher eine Fehlerdetektionseinrichtung zumindest der antwortenden Speichereinrichtung eine auf einen Fehlerzustand reagierende Markierungseinrichtung enthält, um in einer Antwort eine diesen repräsentierende Fehleranzeige einzufügen.

19. Digitale Datenverarbeitungsvorrichtung nach Anspruch 18, in welcher:
A. die Fehlerdetektionseinrichtung eine Einrichtung zum Detektieren eines selektierten Fehlerzustandes enthält, der auf ein Datenelement beschränkt ist, das zuvor noch nicht als fehlerhaft detektiert wurde, und
B. die Markierungseinrichtung auf diesen Fehlerzustand reagiert, indem sie in die dieses Datenelement übertragende Anwort eine für diesen Fehlerzustand repräsentative markierte Fehleranzeige einfügt.

20. Digitale Datenverarbeitungsvorrichtung nach Anspruch 18, in welcher:
A. die Fehlerdetektionseinrichtung eine Einrichtung zum Detektieren eines selektierten Fehlerzustandes enthält, der ein zuvor noch nicht als fehlerhaft detektiertes Datenelement betrifft, und welcher nicht auf dieses Datenelement beschränkt ist, und
B. die Markierungseinrichtung auf diesen Fehlerzustand reagiert, indem sie in die dieses Datenelement übertragende Anwort eine für diesen Fehlerzuetand repräsentative markierte Fehleranzeige einfügt.

21. Digitale Datenverarbeitungsvorrichtung nach Anspruch 18, in welcher:
A. die Fehlerdetektionseinrichtung eine Einrichtung zum Detektieren einer Zugriftsanforderung auf ein zuvor als fehlerhaft detektiertes Datenelement enthält, und
B. die Markierungseinrichtung auf eine solche Detektion reagiert, indem sie in die dieses Datenelement übertragende Anwort eine Deskriptorfehleranzeige einfügt, die anzeigt, daß die Anforderung für ein Datenelement erfolgte, das zuvor als fehlerhaft detektiert wurde.

22. Digitale Datenverarbeitungsvorrichtung nach Anspruch 18, in welcher:
A. Anforderungen und Antworten in der Form von Paketen übertragen werden,
B. die Netzwerkeinrichtung (i) eine Buseinrichtung (20A bis 20F, Fig. 1) zum Transportieren der Pakete, und (ii) mehrere Steuereinrichtungen (22A bis 22R, Fig. 1) enthält, die jeweils mit einer entsprechenden von den Speichereinrichtungen und mit der Buseinrichtung verbunden sind, um die Pakete selektiv zwischen diesen zu übertragen,
C. die Fehlerdetektionseinrichtung eine Einrichtung zum Detektieren eines Fehlers in der Übertragung eines Paketes durch die Steuereinrichtung enthält, und
D. die Markierungseinrichtung auf diesen Fehlerzustand regiert, indem sie in dieses Paket eine diesen Fehlerzustand repräsentierende Anzeige für einen lokalen Fehler einfügt.

23. Digitale Datenverarbeitungsvorrichtung nach Anspruch 18, in welcher;
A. Anforderungen und Antworten in der Form von Paketen übertragen werden,
B. die Buseinrichtung enthält
(i) mehrere Segmenteinrichtungen (20A bis 20F, Fig. 1) jeweils zum Transportieren der Pakete, und
(ii) eine Routing-Einrichtung ("Cell Interconnect", 22A bis 22R, Fig. 1), die mit entsprechenden Paaren der Segmenteinrichtungen verbunden ist, um Pakete selektiv zwischen diesen zu übertragen,
C. die Fehlerdetektionseinrichtung eine Einrichtung zum Detektieren eines Fehlers in der Übertragung eines Paketes durch die Routing-Einrichtung enthält, und
D. die Markierungseinrichtung auf diesen Fehlerzustand regiert, indem sie in dieses Paket eine diesen Fehlerzustand repräsentierende Anzeige für einen entfernt liegenden Fehler einfügt.

24. Digitale Datenverarbeitungsvorrichtung nach Anspruch 18, in welcher:
A. zumindest die antwortende Speichereinrichtung eine Verzeichniseinrichtung zum Speichern eines einem entsprechenden Datenelement zugeordneten Fehler-Flag's enthält, welches bei Fehlen eines Fehlers in diesem Datenelement nicht gesetzt wird, und
B. die Fehlerdetektionseinrichtung eine Einrichtung zum Detektieren eines selektierten Fehlerzustandes beschränkt auf ein zuvor nicht als fehlerhaft detektiertes Datenelement enthält, und
C. die Markierungseinrichtung auf diesen Fehlerzustand reagiert, indem sie das diesem Datenelement entsprechende Fehler-Flag setzt.

25. Digitale Datenverarbeitungsvorrichtung nach Anspruch 24, in welcher:
A. Antworten in der Form von Paketen übertragen werden,
B. die Fehlerdetektionseinrichtung eine Einrichtung zum Detektieren einer Zugriffsanforderung auf ein Datenelement enthält, für welches das entsprechende Fehler-Flag gesetzt ist, und
C. die Markierungseinrichtung in das dieses Datenelement transportierende Paket eine Deakriptorfehleranzeige einfügt, die anzeigt, daß die Anforderung für ein zuvor als fehlerhaft detektiertes Datenelement erfolgte.

26. Verfahren zum Betreiben einer digitalen Datenverarbeitungsvorrichtung mit mehreren Verarbeitungazellen, die über ein Netzwerk miteinander verbunden sind, wobei:
jede Verarbeitungszelle einen Prozessor zum Verarbeiten von Daten enthält, zumindest eine von den Verarbeitungszellen ferner eine Speichereinrichtung zum Speichern von Daten enthält, der Prozessor zumindest einer Verarbeitungszelle eine Anforderungserzeugungseinrichtung enthält, um als ein anfordernder Prozessor eine einen Zugriff auf ein in der Speichereinrichtung gespeichertes Datenelement anfordernde Zugriffeanforderung zu erzeugen, und um diese Anforderung über ein Netzwerk zu übertragen,
die Speichereinrichtung eine auf eine Anforderung reagierende Antworteinrichtung zum Erzeugen einer Antwort enthält,
die Netzwerkeinrichtung mit den Verarbeitungszellen zum Übertragen Anforderungen und Antworten dazwischen verbunden ist,
das Verfahren dadurch gekennzeichnet ist, daß es die Schritte aufweist;
A. Ermöglichen, daß die Speichereinrichtung ermittelt, ob ein Fehler in Zusammenhang zumindest entweder mit dem Zugriff auf das oder der Übertragung des angeforderte(n) Datenelemente(s) vorliegt, und als Reaktion auf eine negative Ermittlung Ermöglichen, daß die Speichereinrichtung eine das angeforderte Datenelement enthaltende Antwort über die Netzwerkeinrichtung überträgt; und
B. als Antwort auf eine positive Ermittlung, daß ein Fehler vorliegt, Ermoglichen, daß die Speichereinrichtung in die Antwort eine Fehleranzeige einfügt.

27. Verfahren nach Anspruch 26, ferner dadurch gekennzeichnet, daß eine Fehleranzeige in einer Antwort den anfordernden Prozessor daran hindert, ein Datenelement darin zu verwenden.

28. Verfahren nach Anspruch 27, in welchem die digitale Datenverarbeitungsvorrichtung mehrere Verarbeitungszellen aufweist, welche jeweils eine entsprechende Speichereinrichtung enthalten, wobei die Speichereinrichtung von jeder dieser Verarbeitungszellen eine auf eine aus Netzwerk empfangene Anforderung reagierende Antworteinrichtung zum Erzeugen einer Antwort enthält, und das Verfahren die Schritte umfaßt:
A. Ermöglichen, daß die Speichereinrichtung ermittelt, ob ein Fehler im Zusammenhang zumindest entweder mit dem Zugriff auf das oder der Übertragung des angeforderte(n) Datenelemente(s) vorliegt, und als Reaktion auf eine negative Ermittlung Ermöglichen, daß die Speichereinrichtung eine das angeforderte Datenelement enthaltende Antwort über die Netzwerkeinrichtung überträgt; und
B. als Antwort auf eine positive Ermittlung, daß ein Fehler vorliegt, Ermöglichen, daß die Speichereinrichtung in die Antwort eine Fehleranzeige einfügt.

29. Verfahren nach Anspruch 26, in welches ferner die Schritte aufweist:
A. Speichern eines ein Datenelement betreffenden Status in zumindest einer anderen Speichereinrichtung als der des anfordernden Prozessors und normalerweise Antworten auf zumindest selektierte von den Antworten, um den Status zu aktualisieren, und
B. Verhindern, daß eine andere Verarbeitungszelle eine Anwort verarbeitet, die die Fehleranzeige enthält,

30. Verfahren nach Anspruch 26, wobei jeder zumindest eine Prozessor einer entsprechenden von den Speichereinrichtungen zugeordnet ist, wobei der Prozessor und die zugeordnete Speicherzelle als eine Verarbeitungszelle bezeichnet werden, und das Verfahren ferner die Schritte aufweist:
A. Versehen der Verarbeitungszelle mit einer mit dem zugeordneten Prozessor verbundenen Subcache-Einrichtung zum Speichern von Daten zur Verarbeitung dadurch,
B. Versehen der Speichereinrichtung mit einer Cache-Speichereinrichtung zum Speichern von Daten, und mit einer mit der Subcache-Einrichtung und der Cache-Einrichtung verbundenen Steuereinrichtung, um bei nicht vorhandenem Fehler in der Cache-Speichereinrichtung zumindest auf von dem zugeordneten zentralen Prozessor selektierte Daten zuzugreifen, und
C. Reagieren auf einen Fehler im Betrieb zumindest entweder der Subcache-Einrichtung oder der Cache-Speichereinrichtung, um die Übertragung von Daten zwischen diesen zu verhindern.

31. Verfahren nach Anspruch 26, welches den Schritt einer Reaktion auf die Fehleranzeige aufweist, indem es eine Analyse des Fehlers initialisiert.

32. Verfahren nach Anspruch 26, wobei jedes von den zumindest selektierten Datenelementen einem Deskriptor zugeordnet ist, durch welchen dieses Datenelement bezeichnet ist, und das Verfahren ferner den Schritt einer Modifikation in dem Falle eine Fehlers des einem angeforderten Datenelementes zugeordneten Deskriptors aufweist, um einen solchen Fehler zu kennzeichnen.

33. Verfahren nach Anspruch 26, ferner mit den Schritten;
A. Detektieren eines Fehlers in Verbindung zumindest mit entweder dem Zugreifen auf das oder dem Übertragen des angeforderten Datenelementes, und
B. selektives Ausführen als Reaktion auf eine derartige Detektion zumindest eines der nachstehenden Schritte:
i) Reagieren auf einen neu detektierten Fehler, der auf das angeforderte Datenelement beschränkt ist, durch Erzeugen der Antwort so, daß sie eine für einen Fehler in einer ersten Fehlerkategorie repräsentative Fehleranzeige enthält,
ii) Reagieren auf einen Fehler, der nicht auf das angeforderte Datenelement beschränkt ist, durch Erzeugen der Antwort so, daß sie eine für einen Fehler in einer zweiten Fehlerkategorie repräsentative Fehleranzeige enthält,
iii) Reagieren auf einen Anforderung eines Datenelementes, für welches zuvor ein Fehler detektiert wurde, durch Erzeugen der Antwort so, daß sie eine für einen Fehler in einer dritten Fehlerkategorie repräsentative Fehleranzeige enthält,
iv) Reagieren auf einen Fehler durch die zugeordnete Speichereinrichtung bei der Übertragung der Antwort auf die Netzwerkeinrichtung, durch Erzeugen der Antwort so, daß sie eine für einen Fehler in einer vierten Fehlerkategorie repräsentative Fehleranzeige enthält, und
v) Reagieren auf eine von der Netzwerkanzeige übertragene Fehleranzeige durch Erzeugen der Antwort so, daß sie eine für einen Fehler in einer fünften Fehlerkategorie repräsentative Fehleranzeige enthält.

34. Verfahren nach Anspruch 26, wobei mehrere von den Verarbeitungszellen jeweils eine entsprechende Speichereinrichtung enthalten, und das Verfahren ferner den Schritt enthält, jeder Speichereinrichtung zu ermöglichen, auf eine von der Netzwerkeinrichtung empfangene Anforderung zur Ausführung einer Speicherzugriffsoperation zu reagieren, indem sie mindestens entweder in einer Antwort empfangene Daten darin speichert, oder Daten daraus zur Übertragung in einer Antwort ausliest.

35. Verfahren nach Anspruch 34, wobei jedem Datenelement eine Adresse zugeordnet ist, durch welche dieses Datenelement gekennzeichnet ist, und wobei die den in den mehreren Speichereinrichtungen gespeicherten Daten zugeordneten Adressen einen einzigen virtuellen Adressraum aufweisen und das Verfahren ferner die Schritte aufweist:
A. Erzeugen der Zugriffsanforderung erzeugt, welche die dem angeforderten Datenelement zugeordnete Adresse spezifiziert, und
B. selektives Reagieren auf die spezifizierte Adresse für einen Zugriff auf das darin angeforderte Datenelement.

36. Verfahren nach Anspruch 34, welches ferner den Schritt einer Reaktion auf eine selektierte die Fehleranzeige enthaltende Antwort aufweist, um die Speicherung des in dieser Antwort enthaltenen Datenelementes in dieser Speichereinrichtung zu verhindern.

37. Verfahren nach Anspruch 29, welches ferner die Schritte aufweist:
A. Speichern eines ein Datenelement in einer Antwort betreffenden Status,
B. normalerweise Aktualisieren dieses Status als Reaktion auf die Übertragung einer dieses Datenelement enthaltenden Anwort, und
C. Reagieren auf die Fehleranzeige in einer dieses Datenelement enthaltenen Antwort, um das Aktualisieren dieses Status zu verhindern.

38. Verfahren nach Anspruch 34, welches ferner den Schritt einer Reaktion auf die Fehleranzeige aufweist, indem eine Analyse des Fehlers initialisiert wird.

39. Verfahren nach Anspruch 34, welches ferner die Schritte aufweist:
A. Speichern eines Fehler-Flag's, das einem entsprechenden Datenelement zugeordnet ist, dessen Fehler-Flag bei Fehlen eines Fehlers in diesem Datenelement nicht gesetzt wird, und
B. Reagieren auf zumindest einen diesem Datenelement zugeordneten selektierten Fehlerzustand, indem dieses Fehler-Flag gesetzt wird.

40. Verfahren nach Anspruch 34, welches ferner die Schritte aufweist:
A. Detektieren zumindest eines selektierten Fehlers in Verbindung mit dem Zugriff auf ein Datenelement und dessen Übertragung in der Antwort, und
B. Reagieren auf diesen Fehlerzustand, indem in diese Anwort eine dafür repräsentative Fehleranzeige einfügt wird.

41. Verfahren nach Anspruch 40, welches ferner die Schritte aufweist:
A. Detektieren eines selektierten Fehlerzustandes der auf ein zuvor noch nicht als fehlerhaft detektiertes Datenelement beschränkt ist, und
B. Reagieren auf diesen Fehlerzustand, indem in die dieses Datenelement übertragende Anwort eine für diesen Fehlerzustand repräsentative markierte Fehleranzeige einfügt wird.

42. Verfahren nach Anspruch 40, welches ferner die Schritte aufweist:
A. Detektieren eines selektierten Fehlerzustandes der auf ein zuvor noch nicht als fehlerhaft detektiertes Datenelement, wobei der Fehler nicht auf dieses Datenelement beschränkt ist, und
B. Reagieren auf diesen Fehlerzustand, indem in die dieses Datenelement übertragende Anwort eine für diesen Fehlerzustand repräsentative nicht markierte Fehleranzeige einfügt wird.

43. Verfahren nach Anspruch 40, welches ferner die Schritte aufweist:
A. Detektieren einer Zugriffsanforderung auf ein zuvor als fehlerhaft detektiertes Datenelement, und
B. Reagieren auf eine solche Detektion, indem in die dieses Datenelement übertragende Anwort eine Deskriptorfehleranzeige einfügt wird, die anzeigt, daß die Anforderung für ein Datenelement erfolgte, das zuvor als fehlerhaft detektiert wurde.

44. Verfahren nach Anspruch 40, welches ferner die Schritte aufweist:
A. Ermöglichen, daß Anforderungen und Antworten in der Form von Paketen übertragen werden,
B. Versehen des Netzwerkes mit (i) einer Buseinrichtung zum Transportieren der Pakete, und (ii) mehreren Steuereinrichtungen, die jeweils mit einer entsprechenden von den Speichereinrichtungen und mit der Buseinrichtung verbunden sind, um die Pakete selektiv zwischen diesen zu übertragen,
C. Detektieren eines Fehlers in der Übertragung eines Paketes durch die Steuereinrichtung, und
D. Reagieren auf diesen Fehlerzustand, indem in dieses Paket eine diesen repräsentierende Anzeige für einen lokalen Fehler eingefügt wird.

45. Verfahren nach Anspruch 40, welches ferner die Schritte aufweist:
A. Ermöglichen, daß Anforderungen und Antworten in der Form von Paketen ühertragen werden,
B. versehen der Buseinrichtung mit mehreren Segmenteinrichtungen jeweils zum Transportieren der Pakete, und einer Routing-Einrichtung, die mit entsprechenden Paaren der Segmenteinrichtungen verbunden sind, um Pakete gelektiv zwischen diesen zu übertragen,
C. Detektieren eines Fehlers in der Übertragung eines Paketes durch die Routing-Einrichtung, und
D. Reagieren auf diesen Fehlerzustand, indem in dieses Paket eine diesen repräsentierende Anzeige für einen entfernt liegenden Fehler eingefügt wird.

46. Verfahren nach Anspruch 40, welches ferner die Schritte aufweist:
A. Speichern eines einem entsprechenden Datenelement zugeordneten Fehler-Flag's, wobei das Flag bei Fehlen eines Fehlers in diesem Datenelement nicht gesetzt wird, und
B. Detektieren eines selektierten Fehlerzustandes, der auf ein zuvor nicht als fehlerhaft detektiertes Datenelement beschränkt ist, und
C. Reagieren auf diesen Fehlerzustand, indem das diesem Datenelement entsprechende Fehler-Flag gesetzt wird.

47. Verfahren nach Anspruch 46, ferner dadurch gekennzeichnet, daß es die Schritte aufweist:
A. Ermöglichen, daß Antworten in der Form von Paketen übertragen werden,
B. Detektieren einer Zugriffsanforderung auf ein Datenelement, für welches das entsprechende Fehlerflag gesetzt ist, und
C. Reagieren auf diese Detektion, indem in das dieses Datenelement transportierende Paket eine Deskriptorfehleranzeige eingefügt wird, welche anzeigt, daß die Zugriffsanforderung für einen Datenelement erfolgte, welches zuvor als fehlerhaft detektiert worden war.

## Revendications

1. Dispositif de traitement de données numériques comprenant une pluralité de cellules de traitement (18A, figure 1) interconnectées par un réseau (20A-20F, figure 1),
chaque cellule de traitement comprenant chacune un processeur (40A-40C, figure 2A) pour le traitement de données, au moins l'une desdites cellules de traitement incluant en outre des moyens de mémoire (42A-42C, figure 2A) pour mémoriser des données, le processeur d'au moins une cellule de traitementcomprenant des moyens (50A-50C, figure 2A) de production de demandes, pour, en tant que processeur demandeur, produire une demande d'accès requérant l'accès à un élément de donnée mémorisé dans lesdite moyens de mémoire et pour transmettre cette demande dans un réseau,
lesdits moyens de mémoire comprenant des moyens de réponse (52A-52C, figure 2A) aptes à répondre à une demande pour produire une réponse,
lesdits moyens formant réseau étant couplés auxdites cellules de traitement pour transférer des demandes et des réponses entre ces cellules,
caractérisé en ce que lesdits moyens de réponse (52A-52C, figure 2A) desdits moyens de mémoire comprennent
A. des moyens de détection d'erreur pour déterminer s'il existe une erreur en liaison avec au moins l'accès à et/ou la transmission de l'élément de donnée demandé, et, en réponse à une détermination négative, autoriser lesdits moyens de mémoire à transmettre une réponse incluant l'élément de donnée demandé dans les moyens formant réseau; et
B. des moyens de confinement d'erreur aptes à répondre à une détermination positive fournie par les moyens de détection d'erreur, pour permettre auxdits moyens de mémoire d'inclure une indication d'erreur dans la réponse.

2. Dispositif de traitement de données numériques selon la revendication 1, dans lequel une indication d'erreur dans une réponse empêche le processeur demandeur d'utiliser un élément de donnée dans ce dispositif.

3. Dispositif de traitement de données numériques selon la revendication 2, dans lequel une pluralité de cellules de traitement comprennent chacune des moyens de mémoire respectifs, les moyens de mémoire de chacune desdites cellules de traitement comprenant des moyens de réponse aptes à répondre à une demande reçue du réseau pour produire une réponse, les moyens de réponse de chacun desdits moyens de mémoire comprenant
A. des moyens de détection d'erreur pour déterminer s'il existe une erreur en liaison avec l'accès à et/ou la transmission de l'élément de donnée demandé, et, en réponse à une détermination négative, autoriser les moyens de mémoire à transmettre une réponse incluant l'élément de donnée demandé dans les moyens formant réseau; et
B. des moyens de confinement d'erreur aptes à répondre à une détermination positive fournie par les moyens de détection d'erreur, pour permettre auxdits moyens de mémoire d'inclure une indication d'erreur dans la réponse.

4. Dispositif de traitement de données numériques selon la revendication 1, dans lequel
A. au moins un processeur inclut
i) des moyens (descripteurs, figure 5) pour mémoriser un état concernant un élément de donnée, et
ii) des moyens pour répondre normalement à au moins certaines réponses sélectionnées parmi lesdites réponses pour mettre à jour ledit état, et
B. lesdits moyens de confinement d'erreur incluent des moyens pour empêcher qu'une autre cellule de traitement traite une réponse qui inclut ladite indication d'erreur.

5. Appareil de traitement de données numériques selon la revendication 4, dans lequel ledit au moins un processeur est un processeur autre que ledit processeur demandeur.

6. Appareil de traitement de données numériques selon la revendication 1, dans lequel
A. au moins l'une desdites cellules de traitement inclut des moyens formant antémémoire secondaire (62, figure 4) couplés au processeur associé pour la mémorisation de données,
B. lesdits moyens de mémoire incluent
i) des moyens formant antémémoire (72, 72B, figure 4) pour mémoriser des données,
ii) des moyens de commande (74A, 74B, figure 4) couplés auxdits moyens formant antémémoire secondaire et auxdits moyens formant antémémoire pour exécuter une opération d'accès en liaison avec lesdits moyens formant antémémoire, lesdits moyens de commande répondant à une erreur en liaison avec l'accès auxdits moyens formant antémémoire secondaire et/ou auxdits moyens formant antémémoires pour empêcher le transfert de données entre ces moyens.

7. Dispositif de traitement de données numériques selon la revendication 1, dans lequel ledit processeur demandeur et/ou lesdits moyens de réponse comprennent des moyens aptes à répondre à ladite indication d'erreur pour déclencher une énalyse de ladite erreur.

8. Dispositif de traitement de données numériques selon la ravendication 1, dans lequel
A. chacun d'au moins certains éléments de données sélectionnés parmi lesdits éléments de données sont associés à un descripteur ("descripteur", figure 5) au moyen duquel ces données sont référencées, et
B. lesdits moyens de mémoire comprennent en outre des moyens pour modifier, dnas le cas d'une erreur, le descripteur associé à un élément de donnée demandé pour signaler une telle erreur.

9. Dispositif de traitement de données numériques selon la revendication 1, dans lequel lesdits moyens de détection d'erreur comprennent au moins l'un des moyens suivants :
A. des moyens de réponse à erreur marquée pour répondre à une erreur nouvellement détectée isolée par rapport à l'élément de donnée demandé pour produire ladite réponse de manière qu'elle inclue une indication d'erreur représentative d'une erreur dans une première catégorie d'erreurs,
B. des moyens de réponse à une erreur non marquée pour répondre à une erreur non isolée par rapport à l'élément de donnée demandé, pour produire ladite réponse de manière qu'elle inclue une indication d'erreur représentative d'une erreur dans une seconde catégorie d'erreurs,
C. des moyens de réponse à une erreur de descripteur pour répondre à une demande d'un élément de donnée, pour lequel une erreur a été détectée précédemment pour la production de ladite réponse de manière qu'elle inclue une indication d'erreur représentative d'une erreurs dans une troisième catégorie d'erreurs,
D. des moyens de réponse à une erreur locale pour répondre à une erreur à l'aide des moyens de mémoire associés lors de la transmission de ladite réponse dans lesdits moyens formant réseau pour produire ladite réponse de manière qu'elle inclue une indication d'erreur représentative d'une erreur dans une quatrième catégorie, et
E. des moyens de réponse à une erreur à distance pour répondre à une indication d'erreur envoyée par lesdits moyens formant réseau pour produire ladite réponse de manière qu'elle inclue une indication d'erreur représentative d'une erreur dans une cinquième catégorie.

10. Dispositif de traitement de données numériques selon la revendication 1, dans lequel une pluralité de cellules de traitement comprenant chacune des moyens de mémoire respectifs, chacun des moyens de mémoire étant apte à répondre à une demande reçue de la part dudit réseau pour effectuer une opération d'accès en mémoire pour excécuter la mémorisation de données reçue dans une réponse dans ces moyens de mémoire, ou la récupération de données à partir de là pour leur transfert dans une réponse.

11. Dispositif de traitement de données numériques selon la revendication 10, dans lequel
A. chacun desdits éléments de données est associé à une adresse ("SystemVirtual Address", figure 5), grâce à laquelle l'élément de donnée est référencé, et dans lequel les adresses associées aux données mémorisées dans ladite pluralité de moyens de mémoire comprennent un seul espace d'adresse virtuelle,
B. lesdits moyens de production de demandes produisant lesdites demandes d'accès spécifiant l'adresse associée à l'élément de donnée demandé, et
C. au moins lesdits moyens de mémoire, qui répondent, incluent des moyes aptes à répondre sélectivement à ladite adresse spécifiée pour accéder à l'élément de donnée demandé, situé à cette addresse.

12. Dispositif de traitement de donnée numériques selon la revendication 10, dans lequel ladite cellule de traitement comporte en outre des moyens aptes à répondre à une réponse qu'ils ont reçue et qui inclut ladite indication d'arreur pour empêcher une mémorisation, dans les moyens de mémoire de la cellule, de l'élément de donnée contenu dans cette réponse.

13. Dispositif de traitement de données numériques selon la revendication 12, dans lequel au moins une cellule de traitement comprend
A . des moyens pour mémoriser une information d'état ("descripteur", figure 5) associée à un élément de donnée dans une réponse,
B. des moyens pour mettre à jour normalement l'information d'état pour une ligne de transmission de données en réponse au transfert d'une réponse contenant cet élément de donnée, et
C. des moyens aptes à répondre à ladite indication d'erreur dans une réponse contenant cet élément de donnée pour empêcher une mise à jour de l'information d'état pour cet élément de donnée.

14. Dispositif de traitement de données numériques selon la revendication 13, dans lequel ladite au moins une cellule de traitement comprend une cellule de traitement autre que la cellule de traitement, dont les moyens de mémoire produisent une réponse.

15. Dispositif de traitement de données numériques selon la revendication 10, dans lequel au moins l'une desdites cellules de traitement comprend des moyens d'analyse d'erreur aptes à répondre à ladite indication d'erreur pour le déclenchement de l'analyse de ladite erreur.

16. Dispositif de traitement de données numériques selon la revendication 7, dans lequel
A. au moins ladite cellule de traitement comprend des moyens formant antémémoire secondaire (62,64, figure 4) couplés au processeur associé pour la mémorisation de données pour le traitement par ce processeur,
B. lesdits moyens de mémoire comprennent
i) des moyens formant antémémoire (72A, 72B, figure 4) pour mémoriser des données,
ii) des moyens de commande (74A, 74D, figure 4) couplés auxdits moyens formant antémémoire secondaire et auxdits moyens formant antémémoire pour accéder, dans lesdits moyens formant antémémoire, au moins à des données sélectionnées demandées par le processeur associé,
C. lesdits moyens de commande aptes à répondre à au moins des erreurs sélectionnées lors du fonctionnement desdits moyens formant antémémoire secondaire et/ou desdits moyens formant antémémoire pour empêcher le transfert de données entre ces moyens.

17. Dispositif de traitement de données numériques selon la revendication 10, dans lequel au moins lesdits moyens de mémoire, qui répondent, comprennent
A. des moyens formant répertoire (56A-56C, figure 2A; figure 5) pour mémoriser un drapeau d'erreur, associé à un élément de donnée correspondant, lequel drapeau d'erreur n'est pas positionné en l'absence d'une erreur dans cet élément de donnée, et
B. lesdits moyens de détection d'erreur comprennent des moyens aptes à répondre à au moins une condition d'erreur sélectionnée associée à cet élément de donnée pour positionner ce drapeau d'erreur.

18. Dispositif de traitement de données numériques selon la revendication 10, dans lequel lesdits moyens de détection d'erreur au moins desdits moyens de mémoire, incluent des moyens de marquage aptes à répondre à une condition d'erreur pour inclure dans une réponse une indication d'erreur représentative de cette condition.

19. Dispositif de traitement de données numériques selon la revendication 18, dans lequel
A. lesdits moyens de détection d'erreur comprennent des moyens pour détecter une condition d'erreur sélectionnée isolée par rapport à un élément de donnée détecté antérieurement comme étant erroné, et
B. lesdits moyens de marquage sont aptes à répondre à cette condition d'erreur pour inclure, dans la réponse transférant cet élément de donnée, une indication d'erreur marquée représentative, de ladite condition d'erreur.

20. Dispositif de traitement de données numériques selon la revendication 18, dans lequel
A. lesdits moyens de détection d'erreur incluent des moyens pour détecter une condition d'erreur sélectionnée associée à un élément de donnée non détecté antérieurement comme étant erroné, laquelle erreur n'est pas isolée vis-à-vis de cet élément de donnée, et
B. lesdits moyens de marquage sont aptes à répondre à cette condition d'erreur pour inclure dans la réponse transférant cet élément de donnée une indication d'erreur non marquée représentative de ladite condition d'erreur.

21. Dispositif de traitement de données numériques selon la revendication 18, dans lequel
A. lesdits moyens de détection d'erreur incluent des moyens pour détecter une demande pour l'accès à un élément de donnée précédemment détecté comme étant erroné, et
B. lesdits moyens de marquage sont aptes à répondre à une telle détection pour inclure dans la réponse transférant cet élément de donnée, l'indication d'erreur de descripteur indiquant que la demande a été faite pour un élément de donnée détecté antérieurement comme étant erroné.

22. Dispositif de traitement de données numériques selon la revendication 18, dans lequel
A. les demandes et les réponses sont transférées sous la forme de paquets,
B. lesdits moyens formant réseau incluent (i) des moyens formant bus (20A-20F, figure 1) pour véhiculer lesdits paquets, et (ii) une pluralité de moyens de commande (22A-22R, figure 1), couplés chacun à l'un respectif desdits moyens de mémoire et auxdits moyens formant bus, pour transférer sélectivement lesdits paquets entre ces moyens,
C. lesdits moyens de détection d'erreur comprennent des moyens pour détecter une erreur lors du transfert d'un paquet par lesdits moyens de commande, et
D. lesdits moyens de marquage sont aptes à répondre à cette condition d'erreur pour inclure dans ledit paquet l'indication d'erreur local représentative de ladite condition d'erreur.

23. Dispositif de traitement de données numériques selon la revendication 18, dans lequel
A. les demandes et les réponses sont transférées sous la forme de paquets,
B. lesdits moyens formant bus ccomprennent
i) une pluralité de moyens en forme de segments (20A-20F, figure 1) servant chacun à véhiculer lesdits paquets, et
ii) des moyens d'acheminement ("interconnexion de cellules" 22A-22R, figure 1, figure 3) couplés à des couples respectifs desdits moyens en forme de segments pour transférer sélectivement des paquets entre ceux-ci.
C. lesdits moyens de détection d'erreur comprennent des moyens pour détecter une erreur lors du transfert d'un paquet par lesdits moyens d'acheminement, et
D. lesdits moyens de marquage, sont aptes à répondre à cette condition d'erreur pour inclure dans ce paquet une indication d'erreur distante représentative de ladite condition d'erreur.

24. Dispositif de traitement de données numériques selon la revendication 18, dans lequel
A. au moins lesdits moyens de mémoire, qui répondent, incluent des moyens formant répertoire pour mémoriser un drapeau d'erreur, associé à un élément de donnée correspondant, lequel drapeau d'erreur n'est pas positionné dans le sens d'une erreur dans cet élément de donnée, et
B. lesdits moyens de détection d'erreur incluent des moyens pour détecter une condition d'erreur sélectionnée isolée par rapport à un élément détecté antérieurement comme erroné, et
C. lesdits moyens de marquage sont aptes à répondre à cette condition d'erreur pour positionner le drapeau d'erreur correspondant à cet élément de donnée.

25. Dispositif de traitement de données numériques selon la revendication 24, dans lequel
A. des réponses sont transférées sous la forme de paquets,
B. lesdits moyens de détection d'erreur comprennent des moyens pour détecter une demande d'accès à un élément de donnée, pour lequel le drapeau d'erreur correspondant est positionné, et
C. lesdits moyens de marquage incluent, dans le paquet transférant cet élément de donnée, une indication d'erreur de descripteur indiquant que la demande a été faite pour un élément de donnée détecté préalablement comme erroné.

26. Procédé pour faire fonctionner un dispositif de traitement de données numériques comprenant une pluralité de cellules de traitement interconnectées par un réseau,
chaque cellule de traitement comprenant chacune un processeur pour le traitement de données, au moins l'une desdites cellules de traitement incluant en outre des moyens de mémoire pour mémoriser des données, le processeur d'au moins une cellule de traitement comprenant des moyens de production de demandes, pour, en tant que processeur demandeur, produire une demande d'accès requérant l'accès à un élément de donnée mémorisé dans lesdits moyens de mémoire et pour transmettre cette demande dans un réseau,
lesdits moyens de mémoire comprenant des moyens de réponse aptes à répondre à une demande pour produire une réponse,
lesdits moyens formant réseau étant couplés auxdites cellules de traitement pour transférer des demandes et des réponses entre ces cellules,
le procédé étant caractérisé en ce qu'il comprend les étapes consistant à :
A. permettre auxdits moyens de mémoire de déterminer si une erreur existe en liaison avec l'accès à et/ou la transmission de l'élément de donnée demandé et, en réponse à une détermination négative, permettre auxdits moyens de mémoire de transmettre une réponse incluant l'élément de donnée demandé, dans les moyens formant réseau; et
B. en réponse à une détermination positive qu'une erreur existe, permettre auxdits moyens de mémoire d'inclure une indication d'erreur dans la réponse.

27. Procédé selon la revendication 26, caractéririsé en outre en ce qu'une indication d'erreur dans une réponse empêche le processeur demandeur d'utiliser un élément de donnée dans cette réponse.

28. Procédé selon la revendication 27, selon lequel le dispositif de traitement de données numériques comprend une pluralité de cellules de traitement comprennent chacune des moyens de mémoire respectifs, les moyens de mémoire de chacune desdites cellules de traitement comprenant des moyens de réponse aptes à répondre à une demande reçue du réseau pour produire une réponse, le procédé incluant les étapes consistant à
A. permettre auxdits moyens de mémoire de déterminer s'il existe une erreur en liaison avec l'accès à et/ou la transmission de l'élément de donnée demandé, et, en réponse à une détermination négative, autoriser les moyens de mémoire respectifs à transmettre une réponse incluant l'élément de donnée demandé dans les moyens formant réseau; et
B. en réponse à une détermination positive indiquant qu'une erreur existe, permettre aux moyens de mémoire respectifs d'inclure une indication d'erreur dans la réponse.

29. Procédé selon la revendication 26, qui comprend en outre les étapes consistant à
A. mémoriser, à l'intérieur d'au moins un moyen de mémoire autre que ledit processeur demandeur, un état concernant un élément de donnée, et à répondre normalement à au moins certaines réponses sélectionnées parmi lesdites réponses pour la mise à jour dudit état, et
B. empêcher qu'une autre cellule de traitement traite une réponse qui inclut ladite indication d'erreur.

30. Procédé selon la revendication 26, selon lequel chacun des processeurs est associé à l'un respectif desdits moyens de mémoire, ledit processeur et ladite mémoire associée étant désignés comme une cellule de traitement, et ledit procédé comprend en outre les étapes consistant à
A. équiper ladite cellule de traitement de moyens formant antémémoire secondaire couplés au processeur associé pour mémoriser des données pour le traitement par ce processeur,
B. équiper lesdits moyens de mémoire de moyens formant antémémoire pour mémoriser des données, et de moyens de commande couplés auxdits moyens formant antémémoire secondaire et auxdits moyens formant antémémoire pour accéder, en l'absence d'une erreur, dans lesdits moyens formant antémémoire à au moins des données sélectionnées demandées par le processeur central associé, et
C. répondre à une erreur de fonctionnement desdits moyens formant antémémoire secondaire et/ou desdits moyens formant antémémoire pour empêcher le transfert de données entre ces moyens.

31. Procédé selon la revendication 26, qui comprend l'étape consistant à répondre à ladite indication d'erreur pour déclencher une analyse de ladite erreur.

32. Procédé selon la revendication 26, selon lequel chacune d'au moins certaines données sélectionnées parmi lesdites données est associée à un descripteur, au moyen duquel cet élément de donnée est référencé, et le procédé comprend en outre l'étape consistant à modifier, dans le cas d'une erreur, le descripteur associé à un élément de donnée demandé pour représenter une telle erreur.

33. Procédé selon la revendication 26, comprenant en outre les étapes consistant à
A. détecter l'erreur en liaison avec l'accès à et/ou la transmission dudit élément de donnée demandé, et
B. exécuter sélectivement, en réponse à une telle détection, au moins l'une des étapes suivantes consistant à
i) répondre à une erreur nouvellement détectée isolée par rapport à l'élément de donnée demandé pour produire ladite réponse pour inclure une indication d'erreur représentative d'une erreur dans une première catégorie d'erreurs,
ii) répondre à une erreur qui n'est pas isolée par rapport à l'élément de donnée demandé pour produire ladite réponse pour inclure une indication d'erreur représentative d'une erreur dans une seconde catégorie d'erreurs;
iii) répondre à une demande pour un élément de donnée pour lequel une erreur a été détectée précédemment pour la production de ladite réponse pour inclure une indication d'erreur représentative d'une erreur dans une troisième catégorie d'erreurs;
iv) répondre à une erreur à l'aide des moyens de mémoire associés pour transmettre ladite réponse dans lesdits moyens formant réseau pour produire ladite réponse de manière à inclure une indication de défaut représentative d'une erreur dans une quatrième catégorie, et
v) répondre à une indication d'erreur envoyée par les moyens formant réseau pour produire ladite réponse de manière à inclure une indication d'erreur représentative d'un défaut dans une cinquième catégorie.

34. Procédé selon la revendication 26, selon lequel une pluralité desdites cellules de traitement comprennent chacune des moyens de mémoire respectifs, et le procédé comprenant en outre l'étape consistant à permettre à chacun desdits moyens de mémoire de répondre à une demande reçue de la part dudit réseau pour exécuter une opération d'accès en mémoire pour effectuer la mémorisation de données reçues dans une réponse, dans ces moyens de mémoire et/ou le récupération de données à partir de ces moyens de mémoire pour le transfert dans une réponse.

35. Procédé selon la revendication 34, selon lequel chacun desdits éléments de données est associé à une adresse, au moyen de laquelle cet élément de donnée est référencé, et selon lequel les adresses associées aux données mémorisées dans ladite pluralité d'éléments de mémoire comprennent un seul espace d'adresse virtuelle, et le procédé comprend en outre les étapes consistant à
A. produire ladite demande d'accès spécifiant l'adresse associée à l'élément de donnée demandé, et
B. répondre sélectivement à ladite adresse spécifiée pour accéder à l'élément de donnée demandé à cette adresse.

36. Procédé selon la revendication 14, qui comprend en outre l'étape consistant à répondre à une réponse sélectionnée incluant ladite indication d'erreur pour empêcher une mémorisation, dans lesdits moyens de mémoire, de l'élément de donnée contenu dans cette réponse.

37. Procédé selon la revendication 29, qui comprend en outre l'étape consistant à
A. mémoriser l'état associé à un élément de donnée dans une réponse,
B. mettre à jour normalement cet état en réponse à un transfert d'une réponse contenant l'élément de donnée, et
C. répondre à ladite indication d'erreur dans une réponse contenant cet élément de donnée pour empêcher la mise à jour de cet état.

38. Procédé selon la revendication 34, qui comprend en outre l'étape de réponse à ladite indication d'erreur pour déclencher une analyse de ladite erreur.

39. Procédé selon la revendication 34, qui comprend en outre les étapes consistant à
A. mémoriser un drapeau d'erreur associé à un élément de donnée correspondant, lequel drapeau d'erreur n'est pas positionné en l'absence d'une erreur dans cet élément de donnée, et
B. répondre à au moins une condition d'erreur sélectionnée associée à cet élément de donnée pour positionner ce drapeau d'erreur.

40. Procédé selon la revendication 34, qui comprend en outre les étapes consistant à
A. détecter au moins une erreur sélectionnée en liaison avec l'accès d'un élément de donnée et son transfert dans ladite réponse, et
B. répondre à ladite condition d'erreur pour inclure dans cette réponse une indication d'erreur représentative de cette condition.

41. Procédé selon la revendication 40, qui comprend en outre les étapes consistant à
A. détecter une condition d'erreur sélectionnée isolée par rapport à un élément de donnée non détecté antérieurement comme erroné, et
B. répondre à cette condition d'erreur pour inclure dans le réponse de transfert en cet élément de donnée une indication d'erreur marquée représentative de cette condition.

42. Procédé selon la revendication 40, qui comprend en outre les étapes consistant à
A. détecter une condition d'erreur sélectionnée associée à un élément de donnée non détecté antérieurement comme erroné, laquelle erreur n'est pas isolée par rapport à cet élément de donnée, et
B. répondre à cette condition d'erreur pour inclure dans la réponse transférant cet élément de donnée une indication d'erreur non marquée représentative de cette condition.

43. Procédé selon la revendication 40, qui comporte en outre les étapes consistant à
A. détecter une demande d'accès à un élément de donnée détecté précédemment comme erroné, et
B. en réponse à une telle détection pour inclure dans la réponse transférant cet élément de donnée, une indication d'erreur de descripteur indiquant que la demande a porté sur un élément de donnée détecté antérieurement comme erroné.

44. Procédé selon la revendication 40, qui comprend en outre les étapes consistant à
A. permettre le transfert de demande et de réponses sous la forme de paquets,
B. équiper lesdits moyens formant réseau (i) de moyens formant bus pour véhiculer lesdits paquets, et (ii) d'une pluralité de moyens de commande, couplés chacun à l'un respectif desdits moyens de mémoire et desdits moyens formant bus, pour transférer sélectivement lesdits paquets entre ces moyens,
B. détecter une erreur dans le transfert d'un paquet par lesdits moyens de commande, et
C. répondre à cette condition d'erreur pour inclure dans ce paquet une indication d'erreur locale représentative de cette condition.

45. Procédé selon la revendication 40, qui comprend en outre les étapes consistant à
A. permettre le transfert de demandes et de réponses sous la forme de paquets,
B. équiper lesdits moyens formant bus d'une pluralité de moyens en forme de segments, dont chacun sert à véhiculer lesdits paquets, et des moyens d'acheminement couplés à des couples respectifs desdits moyens en forme de segments pour transférer sélectivement des paquets entre ces moyens,
C. détection d'une erreur dans le transfert d'un paquet par lesdits moyens d'acheminement, et
D. répondre à cette coondition d'erreur pour inclure dans ce paquet une indication d'erreur distante représentative de cette condition.

46. Procédé selon la revendication 40, qui comporte en outre les étapes consistant à
A. mémoriser un drapeau d'erreur, associé à un élément de donnée correspondant, lequel drapeau d'erreur n'est pas positionné en l'absence d'une erreur dans cet élément de donnée, et
B. détecter une condition d'erreur sélectionnée isolée par rapport à l'élément de donnée non précédemment détecté comme erroné, et
C. répondre à cette condition d'erreur pour positionner le drapeau d'erreur correspondant à cet élément de donnée.

47. Procédé selon la revendication 46, caractérisé en outre en ce qu'il comprend les étapes consistant à
A. permettre le transfert de réponses sous la forme de paquets,
B. détecter une demande d'accès à un élément de donnée, pour lequel le drapeau d'erreur correspondant est positionné, et
C. répondre à cette détection pour inclure dans le paquet transférant cet élément de donnée, une indication d'erreur de descripteur indiquant que la demande a été faite pour un élément de donnée précédemment détecté comme erroné.
